# EUROPEAN PATENT APPLICATION

(11) **EP 4 044 708 A1**
(43) Date of publication of application: **17.08.2022**
(21) Application number: 19948965.9
(22) Date of filing: 14.10.2019
(51) Int. Cl.: H04W 72/00, H04B 7/02

(54) **LINK FAILURE DETECTION METHOD AND APPARATUS**

(71) Applicant: Huawei Technologies Co., Ltd., Shenzhen, Guangdong 518129 (CN)
(72) Inventor: MA, Ruixiang, Shenzhen, Guangdong 518129 (CN); LI, Shengyu, Shenzhen, Guangdong 518129 (CN); GUAN, Lei, Shenzhen, Guangdong 518129 (CN)
(74) Representative: Pfenning, Meinig & Partner mbB
(86) International application number: PCT/CN2019/111064
(87) International publication number: WO 2021/072602

(57) **Abstract**

This application provides a link failure detection method. A terminal device measures quality of radio links corresponding to reference signals in a set. When any one of the radio links is of poor quality, and not all of the radio links are of poor quality, the terminal device notifies a network device of the radio link of poor quality. After determining the radio link of poor quality, the network device does not send and/or receive communication data between the network device and the terminal device on the radio link of poor quality, or does not send and/or receive, on the radio link of poor quality, communication data that does not satisfy a service requirement. This can effectively prevent data from being sent on the radio link of poor quality, avoid an increase in a transmission latency, and effectively ensure reliability of a data service.

## Description

### TECHNICAL FIELD

This application relates to the communication field, and more specifically, to a link failure detection method and apparatus.

### BACKGROUND

Compared with previous generations of mobile communication systems, a 5th generation (5th generation, 5G) communication system imposes higher requirements on a transmission rate, a latency, power consumption, and the like. In the international telecommunication union (international telecommunication union, ITU), enhanced mobile broadband (enhanced mobile broadband, eMBB), massive machine type communication (massive machine type communication, mMTC), and ultra-reliable and low-latency communication (ultra-reliable and low-latency communication, URLLC) are defined as three typical 5G services. This points out a direction for 5G standard formulation.

As one of the three typical 5G services, URLLC is mainly applied to scenarios such as unmanned driving and telemedicine. These application scenarios impose stricter requirements on reliability and latency. Specific requirements of a URLLC service are as follows: Data transmission reliability reaches 99.999%, a transmission latency is less than 1 ms, and instruction overheads are reduced as much as possible when requirements for high reliability and a low latency are satisfied. How to ensure the requirements for reliability and a low latency for URLLC becomes a problem of great concern in this field.

### SUMMARY

This application provides a link failure detection method and apparatus, to ensure reliability of a data service.

According to a first aspect, a link failure detection method is provided. The method may be performed by a terminal device or a module (for example, a chip) disposed in the terminal device. An example in which the method is performed by the terminal device is used for description below.

The method includes: The terminal device receives first indication information sent by a network device, where the first indication information is used to indicate a first set, the first set includes m reference signals, each reference signal corresponds to one or more radio links between the terminal device and the network device, the first set is used by the terminal device to estimate quality of radio links corresponding to the m reference signals, and m is an integer greater than or equal to 2. The terminal device sends second indication information to the network device, where the second indication information is used to indicate n first reference signals, the n first reference signals are n reference signals, in the m reference signals, corresponding to radio links whose quality is lower than a first threshold, and n is a positive integer less than m.

In this application, that quality of a radio link corresponding to a reference signal is lower than the first threshold indicates that the quality of the radio link corresponding to the reference signal cannot satisfy a requirement for communication quality between the terminal device and the network device, in other words, the radio link is of poor quality. That quality of a radio link corresponding to a reference signal is higher than the first threshold indicates that the quality of the radio link corresponding to the reference signal can satisfy a requirement for communication quality between the terminal device and the network device, in other words, the radio link is of good quality.

According to this solution, the terminal device measures quality of radio links corresponding to reference signals in a set. When any one of the radio links is of poor quality, and not all of the radio links are of poor quality, the terminal device notifies the network device of the radio link of poor quality. In this way, after determining the radio link of poor quality, the network device may choose not to send and/or receive communication data between the network device and the terminal device on the radio link of poor quality, or not to send and/or receive, on the radio link of poor quality, communication data that has a strict service requirement. This can effectively prevent data from being sent on the radio link of poor quality, avoid an increase in a transmission latency, and effectively ensure reliability of a data service.

By way of example but not limitation, the reference signals in the first set include one or more of a synchronization signal/physical broadcast channel block (synchronous signal/physical broadcast channel block, SSB), a channel state information reference signal (channel state information reference signal, CSI-RS), a sounding reference signal (sounding reference signal, SRS), a demodulation reference signal (demodulation reference signal, DMRS), and a tracking reference signal (tracking reference signal, TRS).

With reference to the first aspect, in some implementations of the first aspect, each of the m reference signals corresponds to one uplink resource, and
that the terminal device sends second indication information to the network device includes:

The terminal device sends the second indication information by using an uplink resource corresponding to each of the n first reference signals.

By way of example but not limitation, the m reference signals are in one-to-one correspondence with m uplink resources, the second indication information includes n information elements, and one of the n information elements is used to indicate one of the n first reference signals and is sent on an uplink resource corresponding to the first reference signal.

By way of example but not limitation, one or more of the m reference signals correspond to one uplink resource. In other words, each of the m reference signals corresponds to at least one uplink resource, and uplink resources corresponding to at least two reference signals are a same uplink resource.

With reference to the first aspect, in some implementations of the first aspect, each of the m reference signals corresponds to one index value, and
the second indication information includes an index value of each of the n first reference signals.

With reference to the first aspect, in some implementations of the first aspect, each of the m reference signals corresponds to one sequence, and
the second indication information includes a sequence corresponding to each of the n first reference signals.

By way of example but not limitation, each of the m reference signals corresponds to one sequence, or one or more of the m reference signals correspond to one sequence.

In an implementation, n sequences included in the second indication information are respectively carried on n uplink resources. That is, one uplink resource carries one sequence.

In another implementation, n sequences included in the second indication information are scrambling code sequences that are of data or signaling of the terminal device and that are carried on n uplink resources.

In another implementation, sequences included in the second indication information are combined in a preset combination manner and then carried on one uplink resource.

For example, the preset combination manner is modulo-2 addition, and a sequence obtained after a modulo-2 addition operation is performed on the sequences corresponding to the n first reference signals is carried on the uplink resource.

Optionally, the uplink resource for sending the second indication information is an uplink resource on a radio link other than the n radio links.

With reference to the first aspect, in some implementations of the first aspect, the method further includes:

The terminal device sends a random access signal to the network device, where the random access signal is used to indicate the network device to recover the radio link between the terminal device and the network device.

According to this solution of this application, the terminal device not only indicates a radio link of poor quality to the network device, so that the network device avoids scheduling data on the radio link of poor quality, but also indicates a radio link of good quality to the network device, so that the network device reconfigures a radio link for the terminal device through the radio link of good quality, thereby ensuring reliability of a communication service between the network device and the terminal device.

With reference to the first aspect, in some implementations of the first aspect, the method further includes:

The terminal device sends the random access signal based on quasi co-location QCL information of a second reference signal.

With reference to the first aspect, in some implementations of the first aspect, the method further includes:

The terminal device detects downlink control information in a recovery search space set and/or a recovery control resource set based on the QCL information of the second reference signal, where

the downlink control information is used for scheduling downlink data including signaling used to activate or configure a transmission configuration indicator TCI state.

With reference to the first aspect, in some implementations of the first aspect, the method further includes:

The terminal device measures a value of a first parameter of each reference signal in the first set.

The terminal device determines the n first reference signals based on the value of the first parameter of each reference signal in the first set.

With reference to the first aspect, in some implementations of the first aspect, that the n first reference signals are n reference signals, in the m reference signals, corresponding to radio links whose quality is lower than a first threshold includes:

The n first reference signals are n reference signals, in the m reference signals, whose first parameters each have a value less than the first threshold, where the value of the first parameter of each reference signal represents quality of a radio link corresponding to the reference signal.

In an implementation, the first threshold is a threshold specified in a protocol or preset by a system.

In another implementation, the terminal device receives indication information that is sent by the network device and that is used to indicate the first threshold, and the terminal device determines the first threshold based on an indication of the network device.

By way of example but not limitation, the first parameter is at least one of the following parameters: a resource block error rate (block error rate, BLER), reference signal received power (reference signal receiving power, RSRP), reference signal received quality (reference signal receiving quality, RSRQ), a received signal strength indicator (received signal strength indication, RSSI), and a signal to interference plus noise ratio (signal to interference plus noise ratio, SINR).

According to a second aspect, a radio link failure detection method is provided. The method may be performed by a network device or a module (for example, a chip) disposed in the network device. An example in which the method is performed by the network device is used for description below.

The method includes: The network device sends first indication information to a terminal device, where the first indication information is used to indicate a first set, the first set includes m reference signals, each reference signal corresponds to one or more radio links between the terminal device and the network device, the first set is used by the terminal device to estimate quality of radio links corresponding to the m reference signals, and m is an integer greater than or equal to 2. The network device receives second indication information sent by the terminal device, where the second indication information is used to indicate n first reference signals, the n first reference signals are n reference signals, in the m reference signals, corresponding to radio links whose quality is lower than a first threshold, and n is a positive integer less than m.

By way of example but not limitation, the reference signals in the first set include one or more of a CSI-RS, an SSB, a TRS, and a DMRS.

With reference to the second aspect, in some implementations of the second aspect, each of the m reference signals corresponds to one uplink resource, and
that the network device receives second indication information sent by the terminal device includes:

The network device receives the second indication information by using an uplink resource corresponding to each of the n first reference signals.

By way of example but not limitation, the m reference signals are in one-to-one correspondence with m uplink resources, the second indication information includes n information elements, and one of the n information elements is used to indicate one of the n first reference signals. The network device receives, on an uplink resource corresponding to the first reference signal, the information element used to indicate the first reference signal.

By way of example but not limitation, one or more of the m reference signals correspond to one uplink resource. In other words, each of the m reference signals corresponds to at least one uplink resource, and uplink resources corresponding to at least two reference signals are a same uplink resource.

With reference to the second aspect, in some implementations of the second aspect, each of the m reference signals corresponds to one index value, and
the second indication information includes an index value of each of the n first reference signals.

With reference to the second aspect, in some implementations of the second aspect, each of the m reference signals corresponds to one sequence, and
the second indication information includes a sequence corresponding to each of the n first reference signals.

By way of example but not limitation, each of the m reference signals corresponds to one sequence, or one or more of the m reference signals correspond to one sequence.

In an implementation, n sequences included in the second indication information are respectively carried on n uplink resources. That is, one uplink resource carries one sequence.

In another implementation, n sequences included in the second indication information are scrambling code sequences that are of data or signaling of the terminal device and that are carried on n uplink resources.

In another implementation, sequences included in the second indication information are combined in a preset combination manner and then carried on one uplink resource.

For example, the preset combination manner is modulo-2 addition, and a sequence obtained after a modulo-2 addition operation is performed on the sequences corresponding to the n first reference signals is carried on the uplink resource.

Optionally, the uplink resource for sending the second indication information is an uplink resource on a radio link other than the n radio links.

With reference to the second aspect, in some implementations of the second aspect, the method further includes:

The network device receives a random access signal sent by the terminal device, where the random access signal is used to indicate the network device to recover the radio link between the terminal device and the network device.

With reference to the second aspect, in some implementations of the second aspect, that the network device receives a random access signal sent by the terminal device includes:

The network device receives the random access signal based on quasi co-location QCL information of a second reference signal.

With reference to the second aspect, in some implementations of the second aspect, the method further includes:

The network device sends downlink control information to the terminal device in a recovery search space set and/or a recovery control resource set based on the QCL information of the second reference signal, where

the downlink control information is used for scheduling downlink data including signaling used to activate or configure a transmission configuration indicator TCI state.

With reference to the second aspect, in some implementations of the second aspect, that the n first reference signals are n reference signals, in the m reference signals, corresponding to radio links whose quality is lower than a first threshold includes:

The n first reference signals are n reference signals, in the m reference signals, whose first parameters each have a value less than the first threshold, where the value of the first parameter of each reference signal is used to represent quality of a radio link corresponding to the reference signal.

In an implementation, the first threshold is a threshold specified in a protocol or preset by a system.

In another implementation, the network device sends the terminal device indication information used to indicate the first threshold, so that the terminal device determines the first threshold based on an indication of the network device.

By way of example but not limitation, the first parameter is one or more of the following parameters: a BLER, an RSRP, RSRQ, an RSSI, or an SINR.

According to a third aspect, a link failure detection method is provided. The method may be performed by a terminal device or a module (for example, a chip) disposed in the terminal device. An example in which the method is performed by the terminal device is used for description below.

The method includes: The terminal device receives first indication information sent by a network device, where the first indication information is used to indicate a first set, the first set includes m reference signals, each reference signal in the first set corresponds to one or more radio links between the terminal device and the network device, the first set is used by the terminal device to estimate quality of radio links corresponding to the m reference signals, and m is an integer greater than or equal to 2. After determining n first reference signals, the terminal device sends a random access signal to the network device, where the random access signal is used to indicate the network device to recover the radio link between the terminal device and the network device, the n first reference signals are n reference signals, in the m reference signals, corresponding to radio links whose quality is lower than a first threshold, and n is a positive integer less than m.

In this application, that quality of a radio link corresponding to a reference signal is lower than the first threshold indicates that the quality of the radio link corresponding to the reference signal cannot satisfy a requirement for communication quality between the terminal device and the network device, in other words, the radio link is of poor quality. That quality of a radio link corresponding to a reference signal is higher than the first threshold indicates that the quality of the radio link corresponding to the reference signal can satisfy a requirement for communication quality between the terminal device and the network device, in other words, the radio link is of good quality.

With reference to the third aspect, in some implementations of the third aspect, the terminal device sends the random access signal based on quasi co-location QCL information of a second reference signal.

The terminal device sends the random signal to the network device based on the QCL information of the second reference signal, to notify the network device that a radio link corresponding to the second reference signal is of good quality.

According to this solution of this application, when the terminal device detects that at least one radio link is of poor quality, in other words, even if not all of the radio links between the terminal device and the network device are of poor quality, but there is a radio link of poor quality, the terminal device indicates the network device to recover the radio link between the terminal device and the network device, and notifies a radio link of good quality, so that the network device reconfigures a radio link for the terminal device. This can ensure that quality of all of the radio links between the terminal device and the network device can satisfy a service requirement, and effectively prevent data from being sent on the radio link of poor quality, thereby avoiding an increase in a transmission latency caused by retransmission and effectively ensuring reliability of a data service.

By way of example but not limitation, the reference signals in the first set include one or more of a CSI-RS, an SSB, a TRS, and a DMRS.

With reference to the third aspect, in some implementations of the third aspect, the method further includes:

The terminal device detects downlink control information in a recovery search space set and/or a recovery control resource set based on the QCL information of the second reference signal, where
the downlink control information is used for scheduling downlink data including signaling used to activate or configure a transmission configuration indicator TCI state.

With reference to the third aspect, in some implementations of the third aspect, the method further includes:

The terminal device measures a value of a first parameter of each reference signal in the first set.

The terminal device determines the n first reference signals based on the value of the first parameter of each reference signal in the first set.

With reference to the third aspect, in some implementations of the third aspect, that the n first reference signals are n reference signals, in the m reference signals, corresponding to radio links whose quality is lower than a first threshold includes:

The n first reference signals are n reference signals, in the m reference signals, whose first parameters each have a value less than the first threshold, where the value of the first parameter of each reference signal represents quality of a radio link corresponding to the reference signal.

In an implementation, the first threshold is a threshold specified in a protocol or preset by a system.

In another implementation, the terminal device receives indication information that is sent by the network device and that is used to indicate the first threshold, and the terminal device determines the first threshold based on an indication of the network device.

By way of example but not limitation, the first parameter is one or more of the following parameters: a BLER, an RSRP, RSRQ, an RSSI, or an SINR.

According to a fourth aspect, a link failure detection method is provided. The method may be performed by a network device or a module (for example, a chip) disposed in the network device. An example in which the method is performed by the network device is used for description below.

The method includes: The network device sends first indication information to a terminal device, where the first indication information is used to indicate a first set, the first set includes m reference signals, each reference signal corresponds to one or more radio links between the terminal device and the network device, the first set is used by the terminal device to estimate quality of radio links corresponding to the m reference signals, and m is an integer greater than or equal to 2. The network device receives a random access signal sent by the terminal device, where the random access signal is used to indicate the network device to recover the radio link between the terminal device and the network device.

By way of example but not limitation, the reference signals in the first set include one or more of a CSI-RS, an SSB, a TRS, and a DMRS.

With reference to the fourth aspect, in some implementations of the fourth aspect, that the network device receives a random access signal sent by the terminal device includes:

The network device receives the random access signal based on quasi co-location QCL information of a second reference signal.

With reference to the fourth aspect, in some implementations of the fourth aspect, the method further includes:

The network device sends downlink control information in a recovery search space set and/or a recovery control resource set based on the QCL information of the second reference signal, where
the downlink control information is used for scheduling downlink data including signaling used to activate or configure a transmission configuration indicator TCI state.

With reference to the fourth aspect, in some implementations of the fourth aspect, the method further includes:

The network device determines, based on the random access signal, that quality of a radio link corresponding to at least one reference signal in the first set is lower than a first threshold.

With reference to the fourth aspect, in some implementations of the fourth aspect, that the quality of the radio link is lower than the first threshold includes:

A value of a first parameter of a reference signal corresponding to the radio link is less than the first threshold, where the value of the first parameter of the reference signal represents quality of the radio link corresponding to the reference signal.

In an implementation, the first threshold is a threshold specified in a protocol or preset by a system.

In another implementation, the network device sends the terminal device indication information used to indicate the first threshold, so that the terminal device determines the first threshold based on an indication of the network device.

By way of example but not limitation, the first parameter is one or more of the following parameters: a BLER, an RSRP, RSRQ, an RSSI, or an SINR.

According to a fifth aspect, a communication apparatus is provided. The apparatus may be disposed in a terminal device or the apparatus is the terminal device, and includes: a transceiver unit, configured to receive first indication information, where the first indication information is used to indicate a first set, the first set includes m reference signals, and each reference signal corresponds to one or more radio links between the terminal device and a network device; and a processing unit, configured to estimate, based on the first set indicated by using the first indication information received by the transceiver unit, quality of radio links corresponding to the m reference signals included in the first set, where m is an integer greater than or equal to 2. The transceiver unit is further configured to send second indication information, where the second indication information is used to indicate n first reference signals, the n first reference signals are n reference signals, in the m reference signals, corresponding to radio links whose quality is lower than a first threshold, and n is a positive integer less than m.

By way of example but not limitation, the reference signals in the first set include one or more of a CSI-RS, an SSB, a TRS, and a DMRS.

With reference to the fifth aspect, in some implementations of the fifth aspect, the transceiver unit is further configured to: when each of the m reference signals corresponds to one uplink resource, send the second indication information by using an uplink resource corresponding to each of the n first reference signals.

By way of example but not limitation, the m reference signals are in one-to-one correspondence with m uplink resources, the second indication information includes n information elements, and one of the n information elements is used to indicate one of the n first reference signals and is sent on an uplink resource corresponding to the first reference signal.

By way of example but not limitation, one or more of the m reference signals correspond to one uplink resource. In other words, each of the m reference signals corresponds to at least one uplink resource, and uplink resources corresponding to at least two reference signals are a same uplink resource.

With reference to the fifth aspect, in some implementations of the fifth aspect, each of the m reference signals corresponds to one index value, and
the second indication information includes an index value of each of the n first reference signals.

With reference to the fifth aspect, in some implementations of the fifth aspect, each of the m reference signals corresponds to one sequence, and
the second indication information includes a sequence corresponding to each of the n first reference signals.

By way of example but not limitation, each of the m reference signals corresponds to one sequence, or one or more of the m reference signals correspond to one sequence.

In an implementation, n sequences included in the second indication information are respectively carried on n uplink resources. That is, one uplink resource carries one sequence.

In another implementation, n sequences included in the second indication information are scrambling code sequences that are of data or signaling of the terminal device and that are carried on n uplink resources.

In another implementation, sequences included in the second indication information are combined in a preset combination manner and then carried on one uplink resource.

For example, the preset combination manner is modulo-2 addition, and a sequence obtained after a modulo-2 addition operation is performed on the sequences corresponding to the n first reference signals is carried on the uplink resource.

Optionally, the uplink resource for sending the second indication information is an uplink resource on a radio link other than the n radio links.

With reference to the fifth aspect, in some implementations of the fifth aspect,
the transceiver unit is further configured to send a random access signal, where the random access signal is used to indicate the network device to recover the radio link between the terminal device and the network device.

With reference to the fifth aspect, in some implementations of the fifth aspect,
the transceiver unit is further configured to send the random access signal based on quasi co-location QCL information of a second reference signal.

With reference to the fifth aspect, in some implementations of the fifth aspect,
the processing unit is further configured to detect downlink control information in a recovery search space set and/or a recovery control resource set based on the QCL information of the second reference signal, where
the downlink control information is used for scheduling downlink data including signaling used to activate or configure a transmission configuration indicator TCI state.

With reference to the fifth aspect, in some implementations of the fifth aspect,
the processing unit is further configured to: measure a value of a first parameter of each reference signal in the first set, and determine the n first reference signals based on the value of the first parameter of each reference signal in the first set.

By way of example but not limitation, the first parameter is one or more of the following parameters: a BLER, an RSRP, RSRQ, an RSSI, or an SINR.

With reference to the fifth aspect, in some implementations of the fifth aspect, that the n first reference signals are n reference signals, in the m reference signals, corresponding to radio links whose quality is lower than a first threshold includes:

The n first reference signals are n reference signals, in the m reference signals, whose first parameters each have a value less than the first threshold, where the value of the first parameter of each reference signal represents quality of a radio link corresponding to the reference signal.

In an implementation, the first threshold is a threshold specified in a protocol or preset by a system.

In another implementation, the transceiver unit is further configured to receive indication information that is sent by the network device and that is used to indicate the first threshold, and the processing unit is further configured to determine the first threshold based on an indication of the network device.

Optionally, the communication apparatus further includes a storage unit, and the processing unit is coupled to the storage unit. The processing unit may be configured to execute instructions in the storage unit to implement the method in any one of the first aspect and the possible implementations of the first aspect. Optionally, the communication apparatus further includes a communication interface, and the processing unit is coupled to the communication interface.

In an implementation, the communication apparatus is a terminal device. When the communication apparatus is the terminal device, the communication interface may be a transceiver unit or an input/output interface.

In another implementation, the communication apparatus is a chip disposed in a terminal device. When the communication apparatus is the chip disposed in the terminal device, the communication interface may be an input/output interface.

Optionally, the transceiver unit may be a transceiver circuit. Optionally, the processing unit may be a logic circuit. Optionally, the input/output interface may be an input/output circuit.

According to a sixth aspect, a communication apparatus is provided. The apparatus may be disposed in a network device or the apparatus is the network device, and includes: a transceiver unit, configured to send first indication information, where the first indication information is used to indicate a first set, the first set includes m reference signals, each reference signal corresponds to one or more radio links between a terminal device and the network device, the first set is used by the terminal device to estimate quality of radio links corresponding to the m reference signals, and m is an integer greater than or equal to 2; and the transceiver unit is further configured to receive second indication information, where the second indication information is used to indicate n first reference signals, the n first reference signals are n reference signals, in the m reference signals, corresponding to radio links whose quality is lower than a first threshold, and n is a positive integer less than m; and a processing unit, configured to determine that the quality of the radio links corresponding to the n first reference signals indicated by using the second indication information received by the transceiver unit is lower than the first threshold.

By way of example but not limitation, the reference signals in the first set include one or more of a CSI-RS, an SSB, a TRS, and a DMRS.

With reference to the sixth aspect, in some implementations of the sixth aspect, the transceiver unit is further configured to: when each of the m reference signals corresponds to one uplink resource, receive the second indication information by using an uplink resource corresponding to each of the n first reference signals.

By way of example but not limitation, the m reference signals are in one-to-one correspondence with m uplink resources, the second indication information includes n information elements, and one of the n information elements is used to indicate one of the n first reference signals. The transceiver unit is further configured to receive, on an uplink resource corresponding to the first reference signal, the information element corresponding to the first reference signal.

By way of example but not limitation, one or more of the m reference signals correspond to one uplink resource. In other words, each of the m reference signals corresponds to at least one uplink resource, and uplink resources corresponding to at least two reference signals are a same uplink resource.

With reference to the sixth aspect, in some implementations of the sixth aspect, each of the m reference signals corresponds to one index value, and
the second indication information includes an index value of each of the n first reference signals.

With reference to the sixth aspect, in some implementations of the sixth aspect, each of the m reference signals corresponds to one sequence, and
the second indication information includes a sequence corresponding to each of the n first reference signals.

By way of example but not limitation, each of the m reference signals corresponds to one sequence, or one or more of the m reference signals correspond to one sequence.

In an implementation, n sequences included in the second indication information are respectively carried on n uplink resources. That is, one uplink resource carries one sequence.

In another implementation, n sequences included in the second indication information are scrambling code sequences that are of data or signaling of the terminal device and that are carried on n uplink resources.

In another implementation, sequences included in the second indication information are combined in a preset combination manner and then carried on one uplink resource.

For example, the preset combination manner is modulo-2 addition, and a sequence obtained after a modulo-2 addition operation is performed on the sequences corresponding to the n first reference signals is carried on the uplink resource.

Optionally, the uplink resource for sending the second indication information is an uplink resource on a radio link other than the n radio links.

With reference to the sixth aspect, in some implementations of the sixth aspect,
the transceiver unit is further configured to receive a random access signal, where the random access signal is used to indicate the network device to recover the radio link between the terminal device and the network device.

With reference to the sixth aspect, in some implementations of the sixth aspect, that the transceiver unit is further configured to receive a random access signal includes:
the transceiver unit is further configured to receive the random access signal based on quasi co-location QCL information of a second reference signal.

With reference to the sixth aspect, in some implementations of the sixth aspect,
the transceiver unit is further configured to send downlink control information in a recovery search space set and/or a recovery control resource set based on the QCL information of the second reference signal, where
the downlink control information is used for scheduling downlink data including signaling used to activate or configure a transmission configuration indicator TCI state.

With reference to the sixth aspect, in some implementations of the sixth aspect, that the n first reference signals are n reference signals, in the m reference signals, corresponding to radio links whose quality is lower than a first threshold includes:

The n first reference signals are n reference signals, in the m reference signals, whose first parameters each have a value less than the first threshold, where the value of the first parameter of each reference signal is used to represent quality of a radio link corresponding to the reference signal.

In an implementation, the first threshold is a threshold specified in a protocol or preset by a system.

In another implementation, the transceiver unit is further configured to send the terminal device indication information used to indicate the first threshold, so that the terminal device determines the first threshold based on the indication information.

By way of example but not limitation, the first parameter is one or more of the following parameters: a BLER, an RSRP, RSRQ, an RSSI, or an SINR.

Optionally, the communication apparatus further includes a storage unit, and the processing unit is coupled to the storage unit. The processing unit may be configured to execute instructions in the storage unit to implement the method in any one of the second aspect and the possible implementations of the second aspect. Optionally, the communication apparatus further includes a communication interface, and the processing unit is coupled to the communication interface.

In an implementation, the communication apparatus is a network device. When the communication apparatus is the network device, the communication interface may be a transceiver unit or an input/output interface.

In another implementation, the communication apparatus is a chip disposed in a network device. When the communication apparatus is the chip disposed in the network device, the communication interface may be an input/output interface.

Optionally, the transceiver unit may be a transceiver circuit. Optionally, the processing unit may be a logic circuit. Optionally, the input/output interface may be an input/output circuit.

According to a seventh aspect, a communication apparatus is provided. The apparatus may be disposed in a terminal device or the apparatus is the terminal device, and includes: a transceiver unit, configured to receive first indication information, where the first indication information is used to indicate a first set, the first set includes m reference signals, each reference signal in the first set corresponds to one or more radio links between the terminal device and a network device; and a processing unit, configured to estimate quality of radio links corresponding to the m reference signals included in the first set indicated by using the first indication information received by the transceiver unit, where m is an integer greater than or equal to 2. The transceiver unit is further configured to: after the processing unit determines n first reference signals, send a random access signal, where the random access signal is used to indicate the network device to recover the radio link between the terminal device and the network device, the n first reference signals are n reference signals, in the m reference signals, corresponding to radio links whose quality is lower than a first threshold, and n is a positive integer less than m.

By way of example but not limitation, the reference signals in the first set include one or more of a CSI-RS, an SSB, a TRS, and a DMRS.

With reference to the seventh aspect, in some implementations of the seventh aspect,
the transceiver unit is further configured to send the random access signal based on quasi co-location QCL information of a second reference signal.

With reference to the seventh aspect, in some implementations of the seventh aspect,
the processing unit is further configured to detect downlink control information in a recovery search space set and/or a recovery control resource set based on the QCL information of the second reference signal, where
the downlink control information is used for scheduling downlink data including signaling used to activate or configure a transmission configuration indicator TCI state.

With reference to the seventh aspect, in some implementations of the seventh aspect,
the processing unit is further configured to: measure a value of a first parameter of each reference signal in the first set, and determine the n first reference signals based on the value of the first parameter of each reference signal in the first set.

With reference to the seventh aspect, in some implementations of the seventh aspect, that the n first reference signals are n reference signals, in the m reference signals, corresponding to radio links whose quality is lower than a first threshold includes:

The n first reference signals are n reference signals, in the m reference signals, whose first parameters each have a value less than the first threshold, where the value of the first parameter of each reference signal represents quality of a radio link corresponding to the reference signal.

In an implementation, the first threshold is a threshold specified in a protocol or preset by a system.

In another implementation, the transceiver unit is further configured to receive indication information that is sent by the network device and that is used to indicate the first threshold, and the processing unit is further configured to determine the first threshold based on an indication of the network device.

By way of example but not limitation, the first parameter is one or more of the following parameters: a BLER, an RSRP, RSRQ, an RSSI, or an SINR.

Optionally, the communication apparatus further includes a storage unit, and the processing unit is coupled to the storage unit. The processing unit may be configured to execute instructions in the storage unit to implement the method in any one of the third aspect and the possible implementations of the third aspect. Optionally, the communication apparatus further includes a communication interface, and the processing unit is coupled to the communication interface.

In an implementation, the communication apparatus is a terminal device. When the communication apparatus is the terminal device, the communication interface may be a transceiver unit or an input/output interface.

In another implementation, the communication apparatus is a chip disposed in a terminal device. When the communication apparatus is the chip disposed in the terminal device, the communication interface may be an input/output interface.

Optionally, the transceiver unit may be a transceiver circuit. Optionally, the processing unit may be a logic circuit. Optionally, the input/output interface may be an input/output circuit.

According to an eighth aspect, a communication apparatus is provided. The apparatus may be disposed in a network device or the apparatus may be the network device, and includes: a transceiver unit, configured to send first indication information, where the first indication information is used to indicate a first set, the first set includes m reference signals, each reference signal corresponds to one or more radio links between a terminal device and the network device, the first set is used by the terminal device to estimate quality of radio links corresponding to the m reference signals, and m is an integer greater than or equal to 2. The transceiver unit is further configured to receive a random access signal, where the random access signal is used to indicate the network device to recover the radio link between the terminal device and the network device.

By way of example but not limitation, the reference signals in the first set include one or more of a CSI-RS, an SSB, a TRS, and a DMRS.

With reference to the eighth aspect, in some implementations of the eighth aspect, that the transceiver unit is further configured to receive a random access signal includes:

The transceiver unit is further configured to receive the random access signal based on quasi co-location QCL information of a second reference signal.

With reference to the eighth aspect, in some implementations of the eighth aspect,
the transceiver unit is further configured to send downlink control information in a recovery search space set and/or a recovery control resource set based on the QCL information of the second reference signal, where
the downlink control information is used for scheduling downlink data including signaling used to activate or configure a transmission configuration indicator TCI state.

With reference to the eighth aspect, in some implementations of the eighth aspect,
the processing unit is configured to determine, based on the random access signal, that quality of a radio link corresponding to at least one reference signal in the first set is lower than a first threshold.

With reference to the eighth aspect, in some implementations of the eighth aspect, that the quality of the radio link is lower than the first threshold includes:

A value of a first parameter of a reference signal corresponding to the radio link is less than the first threshold, where the value of the first parameter of the reference signal represents quality of the radio link corresponding to the reference signal.

In an implementation, the first threshold is a threshold specified in a protocol or preset by a system.

In another implementation, the transceiver unit is further configured to send the terminal device indication information used to indicate the first threshold, so that the terminal device determines the first threshold based on the indication information.

By way of example but not limitation, the first parameter is one or more of the following parameters: a BLER, an RSRP, RSRQ, an RSSI, or an SINR.

Optionally, the communication apparatus further includes a storage unit, and the processing unit is coupled to the storage unit. The processing unit may be configured to execute instructions in the storage unit to implement the method in any one of the fourth aspect and the possible implementations of the fourth aspect. Optionally, the communication apparatus further includes a communication interface, and the processing unit is coupled to the communication interface.

In an implementation, the communication apparatus is a network device. When the communication apparatus is the network device, the communication interface may be a transceiver unit or an input/output interface.

In another implementation, the communication apparatus is a chip disposed in a network device. When the communication apparatus is the chip disposed in the network device, the communication interface may be an input/output interface.

Optionally, the transceiver unit may be a transceiver circuit. Optionally, the processing unit may be a logic circuit. Optionally, the input/output interface may be an input/output circuit.

According to a ninth aspect, a processor is provided, and includes an input circuit, an output circuit, and a processing circuit. The processing circuit is configured to: receive a signal through the input circuit, and transmit a signal through the output circuit, to enable the processor to perform the method according to any one of the first aspect to the fourth aspect and the possible implementations of the first aspect to the fourth aspect.

In a specific implementation process, the processor may be one or more chips, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the circuits are not limited in embodiments of this application.

According to a tenth aspect, a processing apparatus is provided, and includes a processor and a memory. The processor is configured to read instructions stored in the memory, and may receive a signal by using a receiver, and transmit a signal by using a transmitter, to perform the method according to any one of the first aspect to the fourth aspect and the possible implementations of the first aspect to the fourth aspect.

Optionally, there are one or more processors and one or more memories.

Optionally, the memory may be integrated into the processor, or the memory and the processor are separately disposed.

In a specific implementation process, the memory may be a non-transitory (non-transitory) memory, such as a read-only memory (read-only memory, ROM). The memory and the processor may be integrated into one chip, or may be disposed in different chips. A type of the memory and a manner in which the memory and the processor are disposed are not limited in this embodiment of this application.

It should be understood that, a related data exchange process such as sending of indication information may be a process of outputting the indication information from the processor, and receiving of capability information may be a process of receiving the input capability information by the processor. Specifically, data output by the processor may be output to the transmitter, and input data received by the processor may be from the receiver. The transmitter and the receiver may be collectively referred to as a transceiver.

The processing apparatus according to the tenth aspect may be one or more chips. The processor in the processing apparatus may be implemented by hardware, or may be implemented by software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

According to an eleventh aspect, a chip is provided. The chip includes at least one processor and a communication interface. The chip is disposed in any communication device according to the fifth aspect to the eighth aspect, and is configured to: receive a signal from another communication apparatus other than the communication apparatus and transmit the signal to the processor, or send a signal from the processor to the another communication apparatus other than the communication apparatus. The processor is configured to implement the method according to any one of the possible implementations of the first aspect to the fourth aspect by using a logic circuit or by executing code instructions.

According to a twelfth aspect, a computer program product is provided. The computer program product includes a computer program (also referred to as code or an instruction). When the computer program is run, a computer is enabled to perform the method according to any one of the first aspect to the fourth aspect and the possible implementations of the first aspect to the fourth aspect.

According to a thirteenth aspect, a computer-readable medium is provided. The computer-readable medium stores a computer program (also referred to as code or an instruction). When the computer program is run on a computer, the computer is enabled to perform the method according to any one of the first aspect to the fourth aspect and the possible implementations of the first aspect to the fourth aspect.

According to a fourteenth aspect, a communication system is provided, and includes the foregoing network device and terminal device.

### BRIEF DESCRIPTION OF DRAWINGS

FIG. 1 is a schematic diagram of an example of a communication system applicable to this application;
FIG. 2 is an example flowchart of a radio link failure detection method according to an embodiment of this application;
FIG. 3 is another example flowchart of a radio link failure detection method according to an embodiment of this application;
FIG. 4 is a schematic block diagram of an example of a wireless communication apparatus applicable to an embodiment of this application;
FIG. 5 is a schematic diagram of an example of a structure of a terminal device applicable to an embodiment of this application; and
FIG. 6 is a schematic diagram of an example of a structure of a network device applicable to an embodiment of this application.

### DESCRIPTION OF EMBODIMENTS

The following describes technical solutions in this application with reference to the accompanying drawings.

The technical solutions in embodiments of this application may be applied to various communication systems such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future 5th generation (5th generation, 5G) system or a new radio (new radio, NR) system, a vehicle-to-everything (Vehicle-to-X, V2X) system, a long term evolution-vehicle (Long Term Evolution-Vehicle, LTE-V) system, an internet of vehicles system, a machine type communication (machine type communication, MTC) system, an Internet of things (Internet of Things, IoT) system, a long term evolution-machine (Long Term Evolution-Machine, LTE-M) system, and a machine to machine (Machine to Machine, M2M) system, where V2X may include vehicle to network (vehicle to network, V2N), vehicle to vehicle (vehicle to vehicle, V2V), vehicle to infrastructure (vehicle to infrastructure, V2I), vehicle to pedestrian (vehicle to pedestrian, V2P), and the like.

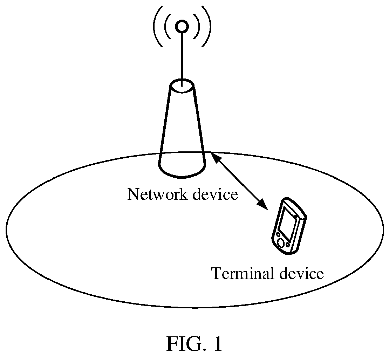

FIG. 1 is a schematic diagram of a wireless communication system 100 applicable to an embodiment of this application.

As shown in FIG. 1, the wireless communication system 100 may include at least one network device, for example, a network device 110 shown in FIG. 1. The wireless communication system 100 may further include at least one terminal device, for example, a terminal device 120 shown in FIG. 1. A plurality of antennas may be configured for either of the network device and the terminal device. The network device and the terminal device may communicate with each other by using a multi-antenna technology.

The terminal device in embodiments of this application may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device in embodiments of this application may be a mobile phone (mobile phone), a tablet computer (pad), a computer having a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, a terminal device in a future evolved public land mobile network (public land mobile network, PLMN), or the like.

The wearable device, also be referred to as a wearable intelligent device, is a general term for wearable devices such as glasses, gloves, watches, clothes, and shoes that are developed by applying wearable technologies to intelligent designs of daily wear. The wearable device is a portable device that is directly worn on a body or integrated into clothes or an accessory of a user. The wearable device is more than a hardware device, and implements powerful functions through software support, data exchange, and cloud interaction. Generalized wearable intelligent devices include full-featured and large-size devices that can implement complete or partial functions without depending on smartphones, such as smart watches or smart glasses, and devices that focus on only one type of application and need to work with other devices such as smartphones, such as various smart bands or smart jewelry for monitoring physical signs.

In addition, the terminal device may alternatively be a terminal device in an Internet of things (Internet of things, IoT) system. IoT is an important part in development of future information technologies. A main technical feature of the IoT is to connect an object to a network by using a communication technology, to implement an intelligent network for human-machine interconnection and thing-thing interconnection.

It should be understood that a specific form of the terminal device is not limited in this application.

In embodiments of this application, the network device may be any device having a wireless transceiver function. The device includes but is not limited to an evolved NodeB (evolved NodeB, eNB), a radio network controller (Radio Network Controller, RNC), a NodeB (NodeB, NB), a base station controller (Base Station Controller, BSC), a base transceiver station (Base Transceiver Station, BTS), a home base station (for example, a home evolved NodeB, or a home NodeB, HNB), a baseband unit (BaseBand Unit, BBU), an access point (Access Point, AP) in a wireless fidelity (Wireless Fidelity, WIFI) system, a wireless relay node, a wireless backhaul node, a transmission point (transmission point, TP), a transmission reception point (transmission reception point, TRP), or the like. Alternatively, the device may be a gNB or a transmission point (TRP or TP) in a 5G system (for example, an NR system), one antenna panel or a group of antenna panels (including a plurality of antenna panels) of a base station in the 5G system, or a network node, for example, a baseband unit (BBU) or a distributed unit (distributed unit, DU), that constitutes a gNB or a transmission point.

In some deployments, the gNB may include a centralized unit (centralized unit, CU) and a DU. The gNB may further include an active antenna unit (active antenna unit, AAU for short). The CU implements some functions of the gNB, and the DU implements some other functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

The network device serves a cell, and the terminal device communicates with the cell by using a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), and the like. These small cells are characterized by small coverage and a low transmit power, and are applicable to providing a high-rate data transmission service.

In addition, the following descriptions are provided to facilitate understanding of embodiments of this application.

First, in this application, "being used to indicate" may include "being used to directly indicate" and "being used to indirectly indicate". When indication information is described as being used to indicate A, the indication information may be used to directly indicate A or used to indirectly indicate A, but it does not necessarily mean that the indication information includes A.

Second, in the following embodiments, "first", "second", and various numeric numbers and letter numbers are merely used for distinguishing for ease of description, and are not used to limit the scope of embodiments of this application. For example, the terms are used to distinguish between different preset correspondences.

Third, in the following embodiments, "preset" may include "indicated by a network device by using signaling or "predefined", for example, "defined in a protocol". Herein, "predefined" may be implemented in a manner in which corresponding code, a table, or other related indication information is pre-stored in a device (for example, including user equipment and a network device). A specific implementation thereof is not limited in this application.

Fourth, a "protocol" in embodiments of this application may be a standard protocol in the communication field, for example, may include an LTE protocol, an NR protocol, and a related protocol applied to a future communication system. This is not limited in this application.

For ease of understanding of embodiments of this application, concepts in embodiments of this application are first described below.

### 1. Quasi co-location (quasi co-location, QCL) assumption

QCL information is used to indicate a downlink signal, for example, a spatial correlation parameter (which may also be referred to as a spatial correlation characteristic) among a physical downlink control channel (physical downlink control channel, PDCCH), a physical downlink shared channel (physical downlink shared channel, PDSCH), a synchronization signal/physical broadcast channel block (synchronous signal/physical broadcast channel block, SSB), a channel state information reference signal (channel state information reference signal, CSI-RS), a sounding reference signal (sounding reference signal, SRS), a demodulation reference signal (demodulation reference signal, DMRS), and a tracking reference signal (tracking reference signal, TRS). Quasi co-location may also be referred to as quasi co-site or co-location. The QCL information may also be referred to as QCL assumption information. The QCL information is used to assist in describing receiving beamforming information by the terminal device and a receiving procedure.

The QCL information may be used to indicate a QCL relationship between two reference signals. A target reference signal may usually be a DMRS, a CSI-RS, or the like, and a referenced reference signal or a source reference signal may usually be a CSI-RS, an SSB, an SRS, or the like. It should be understood that a TRS is also a type of CSI-RS.

Signals corresponding to antenna ports having a QCL relationship may have a same or similar spatial characteristic parameter (or referred to as a parameter), or a spatial characteristic parameter (or referred to as a parameter) of one antenna port may be used to determine a spatial characteristic parameter (or referred to as a parameter) of another antenna port that has a QCL relationship with the antenna port, or two antenna ports have a same or similar spatial characteristic parameter (or referred to as a parameter), or a difference between spatial characteristic parameters (or referred to as parameters) of two antenna ports is less than a threshold. It should be understood that spatial characteristic parameters of two reference signals or channels that satisfy a QCL relationship are the same (close or similar), so that a spatial characteristic parameter of a target reference signal can be inferred based on a resource index of the source reference signal. The spatial characteristic parameter includes one or more of the following parameters:
an angle of arrival (angle of arrival, AoA), a dominant (dominant) angle of arrival AoA, an average angle of arrival, a power angular spectrum (power angular spectrum, PAS) of the angle of arrival, an angle of departure (angle of departure, AoD), a dominant angle of departure, an average angle of departure, a power angular spectrum of the angle of departure, transmit beamforming of the terminal device, receive beamforming of the terminal device, spatial channel correlation, transmit beamforming of the network device, receive beamforming of the network device, an average channel gain, an average channel delay (average delay), a delay spread (delay spread), a Doppler spread (Doppler spread), a Doppler shift (Doppler shift), a spatial reception parameter (spatial Rx parameter), or the like.

The foregoing angles may be decomposition values at different dimensions or a combination of decomposition values at different dimensions. The antenna ports may be antenna ports having different antenna port numbers, antenna ports that have a same antenna port number and that are used to send or receive information at different time points, on different frequencies, and/or on different code domain resources, and/or antenna ports that have different antenna port numbers and that are used to send or receive information at different time points, on different frequencies, and/or on different code domain resources.

The spatial characteristic parameters describe a characteristic of a spatial channel between an antenna port for the source reference signal and an antenna port for the target reference signal, and help the terminal device complete receive-side beamforming or a receiving processing process based on the QCL information. It should be understood that, the terminal device may receive the target reference signal based on receive beam information that is of the source reference signal and that is indicated by using the QCL information. The spatial characteristic parameters further help the terminal device complete transmit-side beamforming or a transmission processing process based on the spatial correlation information. It should be understood that the terminal device may transmit the target reference signal based on transmit beam information that is of the source reference signal and that is indicated by using the spatial correlation information.

To reduce overheads of indicating the QCL information by the network device for the terminal device, in an optional implementation, the network device may indicate that a DMRS of a PDCCH or a PDSCH and one or more of a plurality of reference signal resources previously reported by the terminal device satisfy a QCL relationship. For example, the reference signal may be a CSI-RS. Herein, an index of each reported CSI-RS resource corresponds to one transmit-receive beam pair that is previously established during measurement performed based on the CSI-RS resource. It should be understood that receive beam information of two reference signals or channels that satisfy a QCL relationship is the same, and the terminal device may infer, based on a resource index of the reference signal, receive beam information for receiving the PDCCH or the PDSCH.

Four types of QCL are defined in an existing standard, and the network device may simultaneously configure one or more types of QCL for the terminal device, for example, QCL types A+D, and QCL types C+D:
type A (type A): a Doppler shift, a Doppler spread, an average delay, and a delay spread;
type B (type B): a Doppler shift and a Doppler spread;
type C (type C): a Doppler shift and an average delay; and
type D (type D): a spatial receive parameter.

From a perspective of the transmit end, if two antenna ports are spatially QCLed, it may mean that corresponding beam directions of the two antenna ports are consistent in space. From a perspective of the receive end, if two antenna ports are spatially QCLed, it may mean that the receive end can receive, in a same beam direction, signals sent by using the two antenna ports.

Signals transmitted on ports having a spatial QCL relationship may further have corresponding beams. The corresponding beams may include at least one of the following: a same receive beam, a same transmit beam, a transmit beam corresponding to a receive beam (corresponding to a reciprocity scenario), and a receive beam corresponding to a transmit beam (corresponding to a reciprocity scenario).

Signals transmitted on ports having a spatial QCL relationship may alternatively be understood as signals received or sent by using a same spatial filter (spatial filter). The spatial filter may be at least one of the following: a precoder, a weight of an antenna port, a phase deflection of the antenna port, or an amplitude gain of the antenna port.

Signals transmitted on ports having a spatial QCL relationship may alternatively be understood as having corresponding beam pair links (beam pair links, BPLs). The corresponding BPLs include at least one of the following: a same downlink BPL, a same uplink BPL, an uplink BPL corresponding to a downlink BPL, or a downlink BPL corresponding to an uplink BPL.

Therefore, the spatial receive parameter (namely, QCL type D) may be understood as a parameter used to indicate direction information of a transmit beam or a receive beam.

### 2. Transmission configuration indicator (transmission configuration indicator, TCI) state

The TCI state is used to indicate QCL information of a signal or a channel. The channel may be a PDCCH, a control resource set (control resource set, CORESET), or a PDSCH. The signal may be a CSI-RS, a DMRS, a TRS, or the like. TCI information indicates that a reference signal included in a TCI and the channel or the signal satisfy a QCL relationship, and is mainly used to indicate that during reception of the signal or the channel, information such as a spatial characteristic parameter of the signal or the channel is the same as, similar to, or approximate to information such as a spatial characteristic parameter of the reference signal included in the TCI. For example, TCI information configured for a CORESET indicates a reference signal QCLed with the CORESET.

One TCI state (TCI state) may configure one or more referenced reference signals and an associated QCL type (QCL type). The TCI state includes QCL information, or the TCI state is used to indicate QCL information.

### 3. Control resource set CORESET

The CORESET is a frequency domain resource that is configured by the network device for the terminal device and that is used for PDCCH blind detection. The network device further configures TCI information for each CORESET. The TCI information is used to indicate a QCL type and a reference signal QCLed with a DMRS of the CORESET.

The network device further configures search space for the terminal device. Each piece of search space is used to indicate a time domain location for PDCCH blind detection, and each piece of search space is associated with one CORESET. In this way, a time-frequency location at which the UE blindly detects a PDCCH may be determined.

### 4. Synchronization signal/physical broadcast channel block SSB

The SSB includes at least one of a primary synchronization signal (primary synchronization signal, PSS), a secondary synchronization signal (secondary synchronization signal, SSS), and a physical broadcast channel (physical broadcast channel, PBCH). The SSB is a signal mainly used for cell searching, cell synchronization, and carrying broadcast information.

### 5. Beam (beam)

The beam is a communication resource. The beam may be a wide beam, a narrow beam, or a beam of another type. A beamforming technology may be a beamforming technology or another technical means. The beamforming technology may be specifically a digital beamforming technology, an analog beamforming technology, or a hybrid digital/analog beamforming technology. Different beams may be considered as different resources. Same information or different information may be sent by using different beams. Optionally, a plurality of beams having a same communication characteristic or similar communication characteristics may be considered as one beam. One beam may include one or more antenna ports, configured to transmit a data channel, a control channel, a sounding signal, and the like. For example, a transmit beam may be distribution of signal strength formed in different directions in space after a signal is transmitted by using an antenna, and a receive beam may be distribution of signal strength, in different directions in space, of a radio signal received from an antenna. It may be understood that, one or more antenna ports forming one beam may also be considered as one antenna port set.

Beams may be classified into a transmit beam and a receive beam of the network device, and a transmit beam and a receive beam of the terminal device. The transmit beam of the network device is used to describe transmit-side beamforming information of the network device, and the receive beam of the network device is used to describe receive-side beamforming information of the network device. The transmit beam of the terminal device is used to describe transmit-side beamforming information of the terminal device, and the receive beam of the terminal is used to describe receive-side beamforming information of the terminal device. In other words, the beam is used to describe beamforming information.

The beam may correspond to a time resource, a space resource, and/or a frequency domain resource.

Optionally, the beam may further correspond to a reference signal resource (for example, a reference signal resource for beamforming) or beamforming information.

Optionally, the beam may further correspond to information associated with a reference signal resource of the network device. The reference signal may be a CSI-RS, an SSB, a DMRS, a PTRS, a TRS, or the like. The information associated with the reference signal resource may be a reference signal resource identifier, QCL information (especially QCL type D), or the like. The reference signal resource identifier corresponds to a transmit-receive beam pair that is previously established during measurement performed based on the reference signal resource. The terminal may infer beam information by using the reference signal resource index.

Optionally, the beam may further correspond to a spatial domain filter (spatial filter or spatial domain filter), or a spatial domain transmission filter (spatial domain transmission filter).

The receive beam may be equivalent to a spatial transmission filter, a spatial domain transmission filter, a spatial domain receive filter, or a spatial receive filter. The transmit beam may be equivalent to a spatial domain filter, a spatial domain transmission filter, a spatial domain transmit filter, or a spatial transmit filter. Information about the spatial correlation parameter may be equivalent to a spatial filter (spatial domain transmission/receive filter). Optionally, the spatial filter usually includes a spatial transmit filter and/or a spatial receive filter. The spatial filter may also be referred to as a spatial domain transmit filter, a spatial domain receive filter, a spatial transmission filter, a spatial domain transmission filter, or the like. A receive beam on a terminal device side and a transmit beam on a network device side each may be a downlink spatial filter, and a transmit beam on the terminal device side and a receive beam on the network device side each may be an uplink spatial filter.

### 6. Antenna port (antenna port)

The antenna port may also be referred to as a port for short. The antenna port is a transmit antenna identified by a receive end device or a transmit antenna that can be distinguished in space. One antenna port may be configured for each virtual antenna, the virtual antenna may be a weighted combination of a plurality of physical antennas, and each antenna port may correspond to one reference signal port.

### 7. Link failure

The link failure may also be referred to as a communication failure, a communication link fault, a link fault, a communication link failure, a communication fault, a beam failure, a beam fault, or the like. In embodiments of this application, these concepts have a same meaning. The link failure may be that signal quality of a reference signal used to indicate the link quality is less than a preset threshold. The link failure may mean that signal quality of a reference signal used for PDCCH beam failure detection is lower than or equal to the preset threshold.

### 8. Link failure recovery

The link failure recovery may also be recovering communication on one or more links between the network device and the terminal device, the link failure recovery may also be referred to as communication fault recovery, link fault recovery, beam failure recovery, beam fault recovery, communication link failure recovery, communication link fault recovery, communication link failure recovery, communication failure recovery, link reconfiguration, or the like.

### 9. Configuration information

The configuration information is information indicated by using higher layer signaling sent by the network device to the terminal device. The higher layer signaling may be signaling sent by a higher-layer protocol layer. The higher-layer protocol layer is at least one protocol layer above a physical layer. The higher-layer protocol layer may specifically include at least one of the following protocol layers: a medium access control (medium access control, MAC) layer, a radio link control (radio link control, RLC) layer, a packet data convergence protocol (packet data convergence protocol, PDCP) layer, a radio resource control (radio resource control, RRC) layer, and a non-access stratum (non-access stratum, NAS).

The following describes embodiments of this application in detail with reference to the accompanying drawings.

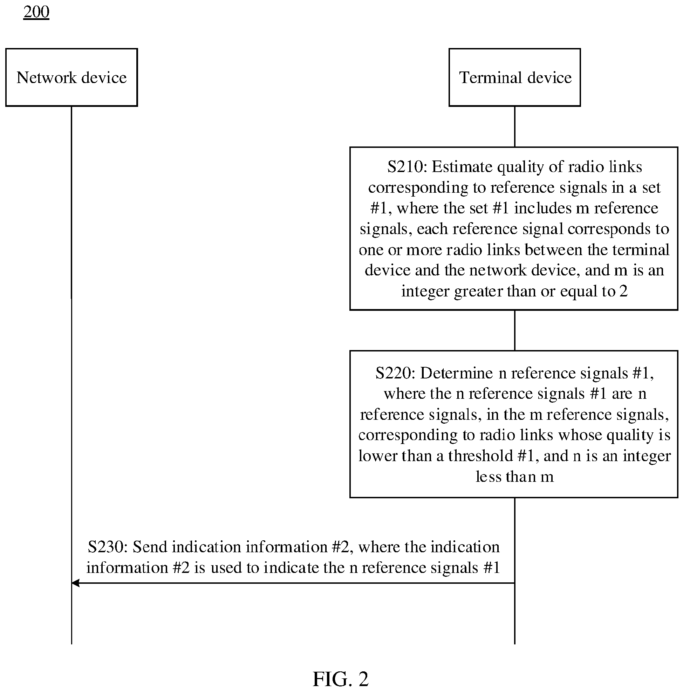

FIG. 2 is an example flowchart of a radio link failure detection method according to an embodiment of this application.

S210: A terminal device estimates quality of radio links corresponding to reference signals in a set #1 (namely, an example of a first set), where the set #1 includes m reference signals, each reference signal corresponds to one or more radio links between the terminal device and a network device, and m is an integer greater than or equal to 2.

In this application, before S210, the network device sends indication information #1 (namely, an example of first indication information) to the terminal device, where the indication information #1 is used to indicate the set #1, the set #1 is a set that is configured by the network device for the terminal device and that is used to estimate the quality of the radio links, the set #1 includes the m reference signals, and each reference signal corresponds to the one or more radio links between the terminal device and the network device.

The indication information #1 may be configuration information A, for configuring the set #1, sent by the network device to the terminal device, and the configuration information A is used to configure the m reference signals included in the set #1. Alternatively, the indication information #1 may be a transmission configuration indicator state (transmission configuration indicator state, TCI-state) that is configured by the network device for the terminal device and that is of one or more control resource sets (control resource sets, CORESETs) used to listen on a physical downlink control channel (physical downlink control channel, PDCCH). The terminal device determines, based on a reference signal set included in the TCI state of the one or more CORESETs, the m reference signals included in the set #1. The terminal device may alternatively determine, in a manner in which the foregoing two cases are considered, the m reference signals included in the set #1. However, this application is not limited thereto. Optionally, when one TCI state includes index values of two reference signal resources, the resource set #1 includes only an index value of a reference signal resource, in the TCI state, for which a QCL type D is configured.

The set #1 is used by the terminal device to estimate the quality of the radio link. Each reference signal in the set #1 corresponds to the one or more radio links. The radio link is a radio resource, used to receive or send information (for example, data or signaling), between the network device and the terminal device. For example, a radio link may be a transmit beam and/or a receive beam. However, this application is not limited thereto. A reference signal and a radio link corresponding to the reference signal are in a QCL relationship, for example, a spatial QCL relationship (that is, the QCL type D).

By way of example but not limitation, the terminal device estimates, by measuring a value of a parameter #1 (namely, an example of a first parameter) of a reference signal in the set #1, quality of a radio link corresponding to the reference signal. In other words, the value of the parameter #1 of the reference signal represents the quality of the radio link corresponding to the reference signal.

For example, when the value of the parameter #1 of the reference signal is greater than a preset threshold, it indicates that the quality of the radio link corresponding to the reference signal can satisfy a requirement for communication quality between the terminal device and the network device, in other words, the radio link is of good quality. When the value of the parameter #1 of the reference signal is less than a preset threshold, it indicates that the quality of the radio link corresponding to the reference signal cannot satisfy a requirement for communication quality between the terminal device and the network device, in other words, the radio link is of poor quality.

The terminal device may periodically measure a parameter #1 of each reference signal in the set #1, or the terminal device may be triggered based on a condition to measure the parameter #1 of the reference signal in the set #1, for example, triggered based on an accumulated quantity of communication times, or triggered after PDCCH blind detection is performed for a preset quantity of times. However, this application is not limited thereto.

By way of example but not limitation, the reference signals in the set #1 include one or more of a CSI-RS, an SSB, a TRS, and a DMRS.

By way of example but not limitation, the parameter #1 is at least one of the following parameters: a resource block error rate (block error rate, BLER), reference signal received power (reference signal receiving power, RSRP), reference signal received quality (reference signal receiving quality, RSRQ), a received signal strength indicator (received signal strength indication, RSSI), and a signal to interference plus noise ratio (signal to interference plus noise ratio, SINR).

S220: The terminal device determines n reference signals #1 (namely, an example of first reference signals), where the n reference signals #1 are n reference signals, in the m reference signals, corresponding to radio links whose quality is lower than a threshold #1 (namely, an example of a first threshold), and n is an integer less than m.

The terminal device measures a value of a parameter #1 of a reference signal in the set #1, to estimate quality of a radio link corresponding to the reference signal, and determines the n reference signals #1 in the m reference signals based on the value of the parameter #1 of the reference signal. A reference signal #1 is a reference signal, in the m reference signals, corresponding to a radio link whose quality is lower than the threshold #1. In other words, the reference signal #1 is a reference signal, in the m reference signals, whose parameter #1 has a value less than the threshold #1. Based on a measurement result of the terminal device, the m reference signals include n reference signals whose parameters #1 each have a value less than the threshold #1. Therefore, the terminal device determines the n reference signals #1.

For example, the parameter #1 is the BLER, and the threshold #1 is 20%. The terminal device measures four reference signals in the set #1, to obtain values of respective parameters #1 of the four reference signals. A BLER of one of the reference signals is 17%, which is less than 20%. Therefore, the reference signal is a reference signal #1. However, values of parameters #1 of the other reference signals in the four reference signals are all greater than 20%. In this case, the four reference signals include one reference signal #1, that is, n is equal to 1.

By way of example but not limitation, the threshold #1 is a threshold specified in a protocol or preset by a system, or the threshold #1 is a threshold indicated by the network device for the terminal device by using configuration information.

For example, the threshold #1 is a threshold that does not satisfy the requirement for communication quality between the network device and the terminal device. The terminal device measures a value of a parameter #1 of a reference signal in the set #1, and determines, after comparing the value with the threshold #1, whether quality of a radio link corresponding to the reference signal satisfies the requirement for communication quality between the network device and the terminal device.

By way of example but not limitation, the threshold #1 is a threshold corresponding to a service #1. Optionally, different services correspond to different thresholds #1.

The service #1 may be a URLLC service, or may be a service that satisfies a reliability requirement and/or a latency requirement. This application is not limited thereto.

For example, the threshold #1 is a threshold corresponding to the URLLC service. When a value of a parameter #1 of a reference signal is less than the threshold #1, it indicates that quality of a radio link corresponding to the reference signal cannot satisfy a reliability requirement and/or a latency requirement of the URLLC service.

Optionally, the network device configures, for the terminal device, the threshold #1 corresponding to the service #1. The network device configures, for the terminal device, the threshold #1 corresponding to the service #1 when the terminal device is connected to a network. When a value of a parameter #1 of a reference signal in the set #1 is less than the threshold #1, it indicates that quality of a radio link corresponding to the reference signal cannot satisfy a service requirement of the service #1.

S230: The terminal device sends indication information #2 (namely, an example of second indication information) to the network device, where the indication information #2 is used to indicate the n reference signals #1.

After determining the n reference signals #1, the terminal device sends the indication information #2 to the network device to notify the network device of the n reference signals #1. After receiving the indication information #2, the network device determines, based on the n reference signals that are in the set #1 and that are indicated by using the indication information #2, that the values of the parameters #1 of the n reference signals each are less than the threshold #1. The network device does not communicate with the terminal device over the radio links corresponding to the n reference signals #1, but communicates with the terminal device over another radio link. Alternatively, the network device does not send and/or receive, on the radio links corresponding to the n reference signals #1, data that cannot satisfy a requirement of a service (for example, the service #1). The indication information #2 is not used to indicate another reference signal in the set #1, indicating that a radio link corresponding to the another reference signal can satisfy the requirement of the service #1. Therefore, data or signaling of the service #1 is sent and/or received only on a radio link that is not indicated by using the indication information #2. For example, the threshold #1 is a threshold of the URLLC service, and after receiving the indication information #2, the network device determines that the quality of the radio links corresponding to the n reference signals #1 cannot satisfy the requirement of the URLLC service. Therefore, the network device does not send and/or receive communication data of the URLLC service between the network device and the terminal device on the links corresponding to the n reference signals #1.

According to this solution, the terminal device measures the quality of the radio links corresponding to the reference signals in the set #1. When any one of the radio links is of poor quality, and not all of the radio links are of poor quality, the terminal device notifies the network device of the radio link of poor quality. After determining the radio link of poor quality, the network device may choose not to send and/or receive communication data between the network device and the terminal device on the radio link of poor quality, or not to send and/or receive, on the radio link of poor quality, communication data that has a strict service requirement. This can effectively prevent data from being sent on the radio link of poor quality, avoid an increase in a transmission latency, and effectively ensure reliability of a data service.

In this application, the indication information #2 may indicate the n reference signals #1 in at least one of the following manners.

Manner 1: The terminal device sends the indication information #2 by using an uplink resource corresponding to each of the n reference signals #1.

Each of the m reference signals corresponds to one uplink resource. The terminal device sends the indication information #2 by using the uplink resources corresponding to the n reference signals #1, to indicate, by using an uplink resource carrying the indication information #2, a reference signal corresponding to the uplink resource. The network device determines, based on the uplink resource carrying the received indication information #2, that the quality of the radio links corresponding to the n reference signals #1 is lower than the threshold #1.

In an implementation, the m reference signals are in one-to-one correspondence with m uplink resources, the indication information #2 includes n information elements, and one of the n information elements is used to indicate one of the n reference signals #1 and is sent on an uplink resource corresponding to the reference signal #1. The network device determines, based on an uplink resource carrying a received information element, a reference signal corresponding to the uplink resource, to determine that quality of a radio link corresponding to the reference signal is lower than the threshold #1. For example, the set #1 includes three reference signals. The terminal device obtains two of the reference signals through measurement. If a value of a parameter #1 of each of a reference signal A and a reference signal B is less than the threshold #1, the indication information #1 sent by the terminal device includes two information elements: an information element A and an information element B. The information element A is sent on an uplink resource A corresponding to the reference signal A, and is used to indicate that quality of a radio link corresponding to the reference signal A is lower than the threshold #1, and the information element B is sent on an uplink resource B corresponding to the reference signal B, and is used to indicate that quality of a radio link corresponding to the reference signal B is lower than the threshold #1. If the network device receives the information element A and the information element B on the uplink resource A and the uplink resource B respectively, the network device determines that the quality of the radio link corresponding to each of the reference signal A and the reference signal B is lower than the threshold #1.

In another implementation, one or more of the m reference signals correspond to one uplink resource. In other words, each of the m reference signals corresponds to at least one uplink resource, and uplink resources corresponding to at least two reference signals are a same uplink resource.

For example, the set #1 includes four reference signals: a reference signal A, a reference signal B, a reference signal C, and a reference signal D. The reference signal A and the reference signal B correspond to an uplink resource A, and the reference signal C and the reference signal D correspond to an uplink resource B. When quality of a radio link corresponding to each of the reference signal A and the reference signal B is lower than the threshold #1, the terminal device sends indication information #2 on the uplink resource A. After receiving the indication information #2 on the uplink resource A, the network device considers that the quality of the radio links/radio link corresponding to the reference signal A and/or the reference signal B is lower than the threshold, and does not send and/or receive communication data on the radio links corresponding to the reference signal A and the reference signal B.

For another example, the set #1 includes four reference signals, such as a reference signal A, a reference signal B, a reference signal C, and a reference signal D. One reference signal or a combination of a plurality of reference signals in the set #1 correspond to one uplink resource. The terminal device determines, based on a reference signal #1, an uplink resource for sending the indication information #2. For example, the reference signal A corresponds to an uplink resource A, and when only quality of a radio link corresponding to the reference signal A in the set #1 is lower than the threshold #1, the terminal device sends the indication information #2 on the uplink resource A. The reference signal A and the reference signal D correspond to an uplink resource B, and when quality of a radio link corresponding to each of the reference signal A and the reference signal B is lower than the threshold #1, the terminal device sends the indication information #2 on the uplink resource B. The reference signal A, the reference signal C, and the reference signal D correspond to an uplink resource C, and when quality of a radio link corresponding to each of the reference signal A, the reference signal C, and the reference signal D is lower than the threshold #1, the terminal device sends the indication information #2 on the uplink resource C. The network device determines, based on an uplink resource carrying the received indication information #2, one or more reference signals corresponding to the uplink resource, to determine that quality of a radio link corresponding to the one or more reference signals is lower than the threshold #1.

By way of example but not limitation, the network device sends indication information x to the terminal device, where the indication information x is used to configure an uplink resource corresponding to a reference signal.

Optionally, the indication information is carried in the indication information #1 for configuring the set #1, or the indication information is carried in configuration information for configuring a reference signal resource.

By way of example but not limitation, the uplink resource is at least one type of uplink channel resource in a physical uplink control channel (physical uplink control channel, PUCCH), a physical uplink shared channel (physical uplink shared channel, PUSCH), or a physical random access channel (physical random access channel, PRACH).

Manner 2: The indication information #2 includes an index value of each of the n reference signals #1.

The terminal device notifies, by using index values of reference signals in the set #1 indicated by using the indication information #2, the network device of a reference signal corresponding to a radio link whose quality is lower than the threshold #1. One index value can be used to determine one reference signal, and the index value may alternatively be an identifier, an index, or a sequence number. However, this application is not limited thereto. After receiving the indication information #2, the network device determines the n reference signals #1 based on the index values, to determine that the quality of the radio links corresponding to the n reference signals #1 is lower than the threshold #1.

Manner 3: The indication information #2 includes a sequence corresponding to each of the n reference signals #1.

Each of the m reference signals corresponds to one sequence, and configuration information for configuring, by the network device, the sequence corresponding to the reference signal may be included in the indication information #1, or may be included in configuration information for configuring a reference signal resource. The terminal device notifies, by indicating the sequence corresponding to each of the n reference signals, the network device that the quality of the radio links corresponding to the n reference signals is lower than the threshold #1. After receiving the indication information #2, the network device determines the n reference signals #1 based on the sequence indicated by using the indication information #2, to determine that the quality of the radio links corresponding to the n reference signals #1 is lower than the threshold #1.

By way of example but not limitation, each of the m reference signals corresponds to one sequence, or one or more of the m reference signals correspond to one sequence.

A correspondence between a reference signal and a sequence is similar to the correspondence between a reference signal and a resource in the foregoing manner 1. For details, refer to the implementation in the manner 1. For brevity, details are not described herein again.

In an implementation, n sequences included in the indication information #2 are respectively carried on n uplink resources for sending. That is, one uplink resource carries one sequence.

In another implementation, n sequences included in the indication information #2 are sent as scrambling codes that are of data or signaling of the terminal device and that are carried on n uplink resources.

On an uplink resource granted by the network device, the terminal device scrambles, by using the sequences included in the indication information #2, data or signaling carried on the uplink resources, and then sends the data or the signaling. After receiving the data or the signaling on the uplink resources, the network device attempts to descramble a sequence corresponding to a reference signal in the set #1, to determine a scrambled sequence, and determine the n reference signals and determine that the quality of the radio links corresponding to the n reference signals is lower than the threshold #1.

For example, after the terminal device determines that quality of n radio links is lower than the threshold #1, when the network device grants one uplink resource for the terminal device to send data, the terminal device scrambles, by using sequences corresponding to the n radio links, data carried on the uplink resource, and then sends the data, to notify the network device of a radio link of poor quality in a timely manner.

In another implementation, sequences included in the indication information #2 are combined in a preset combination manner and then sent on one uplink resource. For example, the preset combination manner is modulo-2 addition, and the indication information #2 includes three sequences. The terminal device calculates a sequence obtained after modulo-2 addition is performed on the three sequences, and sends, on one uplink resource, the sequence obtained after modulo-2 addition is performed on the three sequences. However, this application is not limited thereto.

Optionally, the uplink resource for sending the indication information #2 is an uplink resource on a radio link other than the n radio links.

It should be noted that the indication manners of the indication information #2 and the implementations may be separately implemented or may be combined for implementation. For example, the manner 1 is combined with the manner 3: The indication information #2 includes the sequence corresponding to each of the n reference signals, and the indication information #2 is sent on the uplink resource corresponding to each of the n reference signals.

Optionally, the method 200 shown in FIG. 2 further includes: The terminal device sends a random access signal to the network device, where the random access signal is used to indicate the network device to recover the radio link between the terminal device and the network device.

When a physical layer of the terminal device detects that the quality of the radio links corresponding to the n reference signals #1 in the set #1 is lower than the threshold #1, where n is a positive integer less than or equal to m, the physical layer of the terminal device provides an indication for a higher layer of the terminal device. After receiving the indication, the higher layer of the terminal device provides a reference signal #2 (namely, an example of a second reference signal) for the physical layer of the terminal device, and the terminal device sends the random access signal to the network device based on QCL information of the reference signal #2.

The reference signal #2 is a reference signal, in a set #2, corresponding to a radio link whose quality is higher than a threshold #2. By way of example but not limitation, a value of a parameter #2 of the reference signal #2 is greater than the threshold #2, in other words, the parameter #2 of the reference signal in the set #2 represents the quality of the radio link. In other words, when the value of the parameter #2 of the reference signal #2 is greater than the threshold #2, the radio link corresponding to the reference signal #2 is of good quality. Optionally, the threshold #2 is a threshold specified in a protocol or preset by a system, or the threshold #2 is indicated by using configuration information sent by the network device to the terminal device.

According to this solution of this application, the terminal device not only indicates a radio link of poor quality to the network device, so that the network device avoids scheduling data on the radio link of poor quality, but also indicates a radio link of good quality to the network device, so that the network device configures a radio link for the terminal device through the radio link of good quality, thereby ensuring reliability of a communication service between the network device and the terminal device.

By way of example but not limitation, the parameter #2 is at least one of the following parameters: a BLER, an RSRP, RSRQ, an RSSI, or an SINR.

The network device further sends configuration information B to the terminal device, where the configuration information B is used to configure the set #2, the set #2 includes at least one reference signal, and the set #2 is used by the terminal device to estimate a radio link whose quality is higher than the threshold #2. The reference signal #2 is one of at least one reference signal, in the set #2 provided by the physical layer of the terminal device for the higher layer of the terminal device after the physical layer of the terminal device measures the reference signal in the set #2, corresponding to a radio link whose quality is higher than the threshold #2.

The network device receives the indication information #2, and determines that the n radio links are of poor quality. After receiving the random access signal, the network device determines that the network device may configure a radio link for the terminal device by using the QCL information of the reference signal #2, or may recover the radio link between the terminal device and the network device by using the QCL information of the reference signal #2. When recovering the radio link between the network device and the terminal device, the network device sends downlink control information to the terminal device in a recovery search space set and/or a recovery control resource set based on the QCL information of the reference signal #2, where downlink data scheduled by using the downlink control information carries information used to activate or configure a TCI state for the terminal device. After a preset time period after a moment at which the terminal device sends the random access signal, the terminal device detects, based on the QCL information of the reference signal # 2 in the recovery search space set and/or the recovery control resource set, the downlink control information sent by the network device. The preset time period may be an integer quantity of time intervals starting from a time interval at which the random access signal is sent. The time interval may be one of an orthogonal frequency division multiple access (orthogonal frequency division multiplexing, OFDM) symbol, a slot, and a frame.

By way of example but not limitation, the indication information #2 and the random access signal may be carried on a same uplink resource. For example, the random access signal is carried on a PRACH resource A, and the PRACH resource is an uplink resource corresponding to the reference signal #1 indicated by using the indication information #2. After receiving the random access signal on the PRACH resource A, the network device determines, based on the PRACH resource A, the reference signal #1 and that the quality of the corresponding radio link is lower than the threshold #1, and determines the QCL information of the reference signal #2 based on QCL information of the received random access signal. For another example, the indication information #2 is sent to the network device as a scrambling code sequence of the random access signal. However, this application is not limited thereto.

By way of example but not limitation, the indication information #2 and the random access signal may be carried on different uplink resources, and the network device separately receives the indication information #2 and the random access signal to determine information indicated by using the indication information #2 and the random access signal.

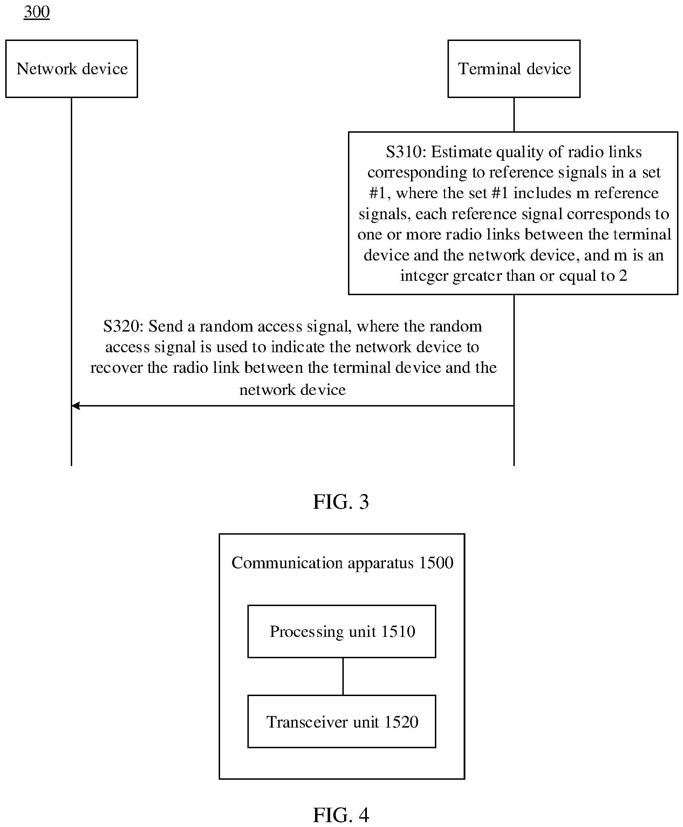

FIG. 3 is another example flowchart of a radio link failure detection method according to an embodiment of this application.

S310: A terminal device measures a parameter #1 of a reference signal in a set #1, where the set #1 includes m reference signals, and each reference signal corresponds to one or more radio links between the terminal device and a network device.

S320: The terminal device sends a random access signal to the network device, where the random access signal is used to indicate the network device to recover the radio link between the terminal device and the network device.

In FIG. 3, steps in which the network device configures the set #1 for the terminal device, the terminal device measures the reference signals in the set #1, and the like are the same as those in FIG. 2. For content in FIG. 3 that is the same as or similar to that in FIG. 2, refer to the descriptions in FIG. 2. For brevity, details are not described herein again.

After the terminal device measures the reference signals in the set #1, when quality of a radio link corresponding to at least one reference signal (for example, n reference signals, where n is a positive integer less than or equal to m) in the set #1 is lower than a threshold #1, a physical layer of the terminal device provides an indication for a higher layer of the terminal device. After receiving the indication, the higher layer of the terminal device provides a reference signal #2 for the physical layer of the terminal device. The terminal device sends the random access signal to the network device based on QCL information of the reference signal #2, to indicate the network device to recover the radio link between the terminal device and the network device. The reference signal #2 is a reference signal, in a set #2, corresponding to a radio link whose quality is higher than a threshold #2. By way of example but not limitation, a value of a parameter #2 of the reference signal #2 is greater than the threshold #2, in other words, the parameter #2 of the reference signal in the set #2 represents the quality of the radio link. In other words, when the value of the parameter #2 of the reference signal #2 is greater than the threshold #2, the radio link corresponding to the reference signal #2 is of good quality.

After receiving the random access signal sent by the terminal device, the network device determines that quality of at least one radio link between the network device and the terminal device is lower than the threshold #1. In this case, the network device recovers the radio link between the network device and the terminal device. The network device sends downlink control information to the terminal device in a recovery search space set and/or a recovery control resource set based on the QCL information of the reference signal #2, where downlink data scheduled by using the downlink control information carries information used to activate or configure a TCI state for the terminal device. After a preset time period after a moment at which the terminal device sends the random access signal, the terminal device detects, based on the QCL information of the reference signal # 2 in the recovery search space set and/or the recovery control resource set, the downlink control information sent by the network device.

According to this solution of this application, when the terminal device detects that at least one radio link is of poor quality, in other words, even if not all of the radio links between the terminal device and the network device are of poor quality, but there is a radio link of poor quality, the terminal device indicates the network device to recover the radio link between the terminal device and the network device, and notifies a radio link of good quality, so that the network device reconfigures a radio link for the terminal device. This can ensure that quality of all of the radio links between the terminal device and the network device can satisfy a service requirement, and effectively prevent data from being sent on the radio link of poor quality, thereby avoiding an increase in a transmission latency caused by retransmission and effectively ensuring reliability of a data service.

The method provided in embodiments of this application is described above in detail with reference to FIG. 2 and FIG. 3. Apparatuses provided in embodiments of this application are described below in detail with reference to FIG. 4 to FIG. 6.

FIG. 4 is a schematic block diagram of a communication apparatus according to an embodiment of this application. As shown in FIG. 4, the communication apparatus 1500 may include a processing unit 1510 and a transceiver unit 1520.

In a possible design, the communication apparatus 1500 may correspond to the terminal device in the foregoing method embodiments, for example, may be a terminal device or a chip disposed in the terminal device.

It should be understood that the communication apparatus 1500 may correspond to the terminal device in the methods 200 and 300 according to embodiments of this application. The communication apparatus 1500 may include units configured to perform the method performed by the terminal device in the method 200 in FIG. 2 and the method 300 in FIG. 3. In addition, the units in the communication apparatus 1500 and the foregoing other operations and/or functions are respectively used to implement corresponding procedures in the methods 200 and 300 in FIG. 2.

When the communication apparatus 1500 is configured to perform the method 200 in FIG. 2, the transceiver unit 1520 may be configured to perform S230 in the method 200, and the processing unit 1510 may be configured to perform S210 and S220 in the method 200. When the communication apparatus 1500 is configured to perform the method 300 in FIG. 2, the transceiver unit 1520 may be configured to perform S320 in the method 300, and the processing unit 1510 may be configured to perform S310 in the method 300. It should be understood that a specific process in which the units perform the foregoing corresponding steps is described in detail in the foregoing method embodiments, and for brevity, details are not described herein.

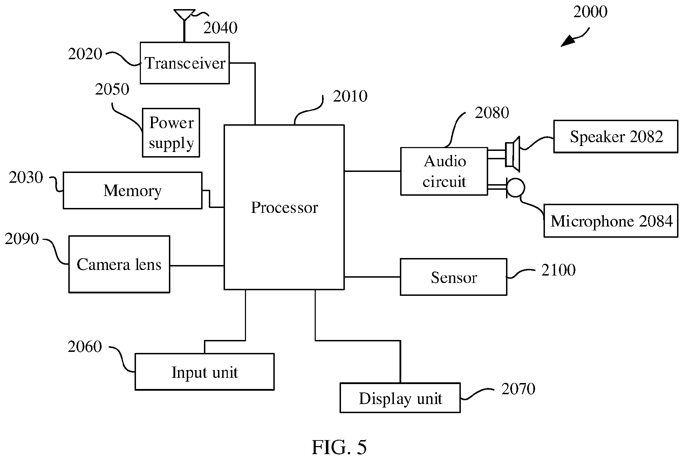

It should be further understood that, when the communication apparatus 1500 is the terminal device, the transceiver unit 1520 in the communication apparatus 1500 may correspond to a transceiver 2020 in a terminal device 2000 shown in FIG. 5, and the processing unit 1510 in the communication apparatus 1500 may correspond to a processor 2010 in the terminal device 2000 shown in FIG. 5.

It should be further understood that when the communication apparatus 1500 is the terminal device, the transceiver unit 1520 in the communication apparatus 1500 may be implemented by using a communication interface (for example, a transceiver or an input/output interface), for example, may correspond to the transceiver 2020 in the terminal device 2000 shown in FIG. 5, and the processing unit 1510 in the communication apparatus 1500 may be implemented by using at least one processor, for example, may correspond to the processor 2010 in the terminal device 2000 shown in FIG. 5, or the processing unit 1510 in the communication apparatus 1500 may be implemented by using at least one logical circuit.

Optionally, the communication apparatus 1500 may further include a processing unit 1510. The processing unit 1510 may be configured to process instructions or data, to implement a corresponding operation.

Optionally, the communication apparatus 1500 may further include a storage unit. The storage unit may be configured to store instructions or data. The processing unit may invoke the instructions or the data stored in the storage unit, to implement a corresponding operation.

It should be understood that a specific process in which the units perform the foregoing corresponding steps is described in detail in the foregoing method embodiments, and for brevity, details are not described herein.

In another possible design, the communication apparatus 1500 may correspond to the network device in the foregoing method embodiments, for example, may be a network device or a chip disposed in the network device.

It should be understood that the communication apparatus 1500 may correspond to the network device in the methods 200 and 300 according to embodiments of this application. The communication apparatus 1500 may include units configured to perform the method performed by the network device in the method 200 in FIG. 2 and the method 300 in FIG. 3. In addition, the units in the communication apparatus 1500 and the foregoing other operations and/or functions are respectively used to implement corresponding procedures in the method 200 in FIG. 2 and the method 300 in FIG. 3.

When the communication apparatus 1500 is configured to perform the method 200 in FIG. 2, the transceiver unit 1520 may be configured to perform S230 in the method 200. When the communication apparatus 1500 is configured to perform the method 300 in FIG. 3, the transceiver unit 1520 may be configured to perform S320 in the method 300. It should be understood that a specific process in which the units perform the foregoing corresponding steps is described in detail in the foregoing method embodiments, and for brevity, details are not described herein.

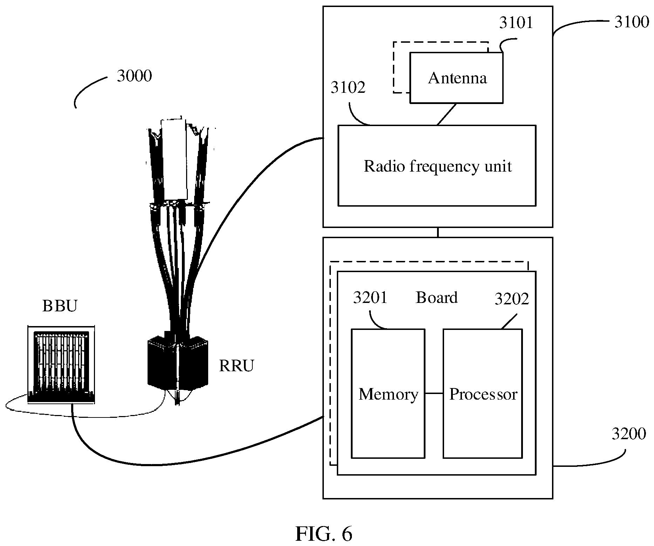

It should be further understood that, when the communication apparatus 1500 is the network device, the transceiver unit in the communication apparatus 1500 may correspond to a transceiver 3100 in a network device 3000 shown in FIG. 6, and the processing unit 1510 in the communication apparatus 1500 may correspond to a processor 3202 in the network device 3000 shown in FIG. 6.

Optionally, the communication apparatus 1500 may further include a processing unit 1510. The processing unit 1510 may be configured to process instructions or data, to implement a corresponding operation.

Optionally, the communication apparatus 1500 may further include a storage unit. The storage unit may be configured to store instructions or data. The processing unit may invoke the instructions or the data stored in the storage unit, to implement a corresponding operation.

It should be understood that a specific process in which the units perform the foregoing corresponding steps is described in detail in the foregoing method embodiments, and for brevity, details are not described herein.

It should be further understood that when the communication apparatus 1500 is the network device, the transceiver unit 1520 in the communication apparatus 1500 may be implemented by using a communication interface (for example, a transceiver or an input/output interface), for example, may correspond to the transceiver 3100 in the network device 3000 shown in FIG. 6, and the processing unit 1510 in the communication apparatus 1500 may be implemented by using at least one processor, for example, may correspond to the processor 3202 in the network device 3000 shown in FIG. 6, or the processing unit 1510 in the communication apparatus 1500 may be implemented by using at least one logical circuit.

FIG. 5 is a schematic diagram of a structure of a terminal device 2000 according to an embodiment of this application. The terminal device 2000 may be used in the system shown in FIG. 1, to perform a function of the terminal device in the foregoing method embodiments. As shown in the figure, the terminal device 2000 includes a processor 2010 and a transceiver 2020. Optionally, the terminal device 2000 further includes a memory 2030. The processor 2010, the transceiver 2020, and the memory 2030 may communicate with each other through an internal connection path, to transfer a control signal and/or a data signal. The memory 2030 is configured to store a computer program. The processor 2010 is configured to invoke and run the computer program in the memory 2030, to control the transceiver 2020 to receive or send a signal. Optionally, the terminal device 2000 may further include an antenna 2040, configured to send, by using a radio signal, uplink data or uplink control signaling output by the transceiver 2020.

The processor 2010 and the memory 2030 may be integrated into one processing apparatus. The processor 2010 is configured to execute program code stored in the memory 2030 to implement the foregoing functions. During specific implementation, the memory 2030 may alternatively be integrated into the processor 2010, or may be independent of the processor 2010. The processor 2010 may correspond to the processing unit in FIG. 4.

The transceiver 2020 may correspond to the transceiver unit in FIG. 4. The transceiver 2020 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that the terminal device 2000 shown in FIG. 5 can implement processes related to the terminal device in the method embodiments shown in FIG. 2 and FIG. 3. Operations and/or functions of modules in the terminal device 2000 are respectively intended to implement corresponding procedures in the foregoing method embodiments. For details, refer to the descriptions in the foregoing method embodiments. To avoid repetition, detailed descriptions are properly omitted herein.

The processor 2010 may be configured to perform an action implemented inside the terminal device described in the foregoing method embodiments, and the transceiver 2020 may be configured to perform an action of sending performed by the terminal device to the network device or receiving performed by the terminal device from the network device described in the foregoing method embodiments. For details, refer to the descriptions in the foregoing method embodiments. Details are not described herein again.

Optionally, the terminal device 2000 may further include a power supply 2050, configured to supply power to various devices or circuits in the terminal device.

In addition, to improve functions of the terminal device, the terminal device 2000 may further include one or more of an input unit 2060, a display unit 2070, an audio circuit 2080, a camera lens 2090, a sensor 2100, and the like. The audio circuit may further include a loudspeaker 2082, a microphone 2084, and the like.

FIG. 6 is a schematic diagram of a structure of a network device according to an embodiment of this application, for example, may be a schematic diagram of a related structure of the network device.

It should be understood that the network device 3000 shown in FIG. 6 can implement processes related to the network device in the method embodiments shown in FIG. 2 and FIG. 3. Operations and/or functions of modules in the network device 3000 are respectively intended to implement corresponding procedures in the foregoing method embodiments. For details, refer to the descriptions in the foregoing method embodiments. To avoid repetition, detailed descriptions are properly omitted herein.

It should be understood that the network device 3000 shown in FIG. 6 is merely a possible architecture of the network device, and should not constitute any limitation on this application. The method provided in this application is applicable to a network device in another architecture, for example, a network device including a CU, a DU, and an AAU. A specific architecture of the network device is not limited in this application.

An embodiment of this application further provides a processing apparatus, including a processor and an interface. The processor is configured to perform the method in any one of the foregoing method embodiments.

It should be understood that, the processing apparatus may be one or more chips. For example, the processing apparatus may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processing circuit (digital signal processor, DSP), a micro controller unit (micro controller unit, MCU), a programmable logic device (programmable logic device, PLD), or another integrated chip.

In an implementation process, steps in the foregoing method may be implemented by using a hardware integrated logic circuit in the processor or an instruction in a form of software. The steps of the methods disclosed with reference to embodiments of this application may be directly presented as being performed and completed by a hardware processor, or performed and completed by a combination of hardware and a software module in a processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor. To avoid repetition, details are not described herein again.

It should be noted that the processor in embodiments of this application may be an integrated circuit chip and has a signal processing capability. In an implementation process, steps in the foregoing method embodiments may be implemented by using a hardware integrated logic circuit in the processor or an instruction in a form of software. The foregoing processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The methods, the steps, and logic block diagrams that are disclosed in embodiments of this application may be implemented or performed. The general-purpose processor may be a microprocessor, or the processor may be any conventional processor or the like. The steps of the methods disclosed with reference to embodiments of this application may be directly presented as being performed and completed by a hardware decoding processor, or performed and completed by a combination of hardware and a software module in a decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor.

It may be understood that, in embodiments of this application, the memory may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that memories in the system and method described in this specification include but are not limited to the memories and memories of any other proper types.

According to the method provided in embodiments of this application, this application further provides a computer program product. The computer program product includes computer program code. When the computer program code is run on a computer, the computer is enabled to perform the method in embodiments shown in FIG. 2 and FIG. 3.

According to the method provided in embodiments of this application, this application further provides a computer-readable medium. The computer-readable medium stores program code. When the program code is run on a computer, the computer is enabled to perform the method in embodiments shown in FIG. 2 and FIG. 3.

According to the method provided in embodiments of this application, this application further provides a system, including the foregoing one or more terminal devices and one or more network devices.

The network device and the terminal device in the foregoing apparatus embodiments exactly correspond to the network device and the terminal device in the method embodiments. A corresponding module or unit performs a corresponding step. For example, a communications unit (a transceiver) performs a receiving step or a sending step in the method embodiments, and a processing unit (a processor) may perform another step other than the sending step and the receiving step. For a function of a specific unit, refer to a corresponding method embodiment. There may be one or more processors.

All or some of the foregoing embodiments may be implemented through software, hardware, firmware, or any combination thereof. When software is used to implement embodiments, embodiments may be implemented completely or partially in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

The network device and the terminal device in the foregoing apparatus embodiments exactly correspond to the network device and the terminal device in the method embodiments. A corresponding module or unit performs a corresponding step. For example, a communications unit (a transceiver) performs a receiving step or a sending step in the method embodiments, and a processing unit (a processor) may perform another step other than the sending step and the receiving step. For a function of a specific unit, refer to a corresponding method embodiment. There may be one or more processors.

Terms such as "component", "module", and "system" used in this specification are used to indicate computer-related entities, hardware, firmware, combinations of hardware and software, software, or software being executed. For example, the component may be, but is not limited to, a process that runs on a processor, a processor, an object, an executable file, an execution thread, a program, and/or a computer. As illustrated by using figures, both a computing device and an application that runs on the computing device may be components. One or more components may reside within the process and/or the execution thread, and the component may be located on one computer and/or distributed between two or more computers. In addition, these components may be executed by various computer-readable media that store various data structures. The components may communicate by using a local and/or remote process and based on, for example, a signal having one or more data packets (for example, data from two components interacting with another component in a local system and/or a distributed system, and/or across a network such as the Internet interacting with other systems by using the signal).

A person of ordinary skill in the art may be aware that units and algorithm steps in the examples described with reference to embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions of each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units are integrated into one unit.

In the foregoing embodiments, all or some of the functions of the function units may be implemented by software, hardware, firmware, or any combination thereof. When software is used to implement embodiments, embodiments may be implemented completely or partially in a form of a computer program product. The computer program product includes one or more computer instructions (programs). When the computer program instructions (programs) are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

When the functions are implemented in a form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the method described in embodiments of this application. The foregoing storage medium includes various media that can store program code, for example, a USB flash drive, a removable hard disk, a read-only memory (Read-Only Memory, ROM), a random access memory (Random Access Memory, RAM), a magnetic disk, and an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A radio link failure detection method, comprising:
receiving first indication information sent by a network device, wherein the first indication information is used to indicate a first set, the first set comprises m reference signals, each reference signal corresponds to one or more radio links between a terminal device and the network device, the first set is used by the terminal device to estimate quality of radio links corresponding to the m reference signals, and m is an integer greater than or equal to 2; and
sending second indication information to the network device, wherein the second indication information is used to indicate n first reference signals, the n first reference signals are n reference signals, in the m reference signals, corresponding to radio links whose quality is lower than a first threshold, and n is a positive integer less than m.

2. The method according to claim 1, wherein each of the m reference signals corresponds to one uplink resource, and
the sending second indication information to the network device comprises:
sending the second indication information by using an uplink resource corresponding to each of the n first reference signals.

3. The method according to claim 1 or 2, wherein each of the m reference signals corresponds to one index value, and
the second indication information comprises an index value of each of the n first reference signals.

4. The method according to any one of claims 1 to 3, wherein each of the m reference signals corresponds to one sequence, and
the second indication information comprises a sequence corresponding to each of the n first reference signals.

5. The method according to any one of claims 1 to 4, wherein the method further comprises:
sending a random access signal to the network device, wherein the random access signal is used to indicate the network device to recover the radio link between the terminal device and the network device.

6. The method according to claim 5, wherein
the sending a random access signal to the network device comprises:
sending the random access signal based on quasi co-location QCL information of a second reference signal.

7. The method according to claim 5 or 6, wherein the method further comprises:
detecting downlink control information in a recovery search space set and/or a recovery control resource set based on the QCL information of the second reference signal, wherein
the downlink control information is used for scheduling downlink data comprising signaling used to activate or configure a transmission configuration indicator TCI state.

8. The method according to any one of claims 1 to 7, wherein the method further comprises:
measuring a value of a first parameter of each reference signal in the first set; and
determining the n first reference signals based on the value of the first parameter of each reference signal in the first set.

9. The method according to any one of claims 1 to 8, wherein
that the n first reference signals are n reference signals, in the m reference signals, corresponding to radio links whose quality is lower than a first threshold comprises:
the n first reference signals are n reference signals, in the m reference signals, whose first parameters each have a value less than the first threshold, wherein the value of the first parameter of each reference signal represents quality of a radio link corresponding to the reference signal.

10. A radio link failure detection method, comprising:
sending first indication information to a terminal device, wherein the first indication information is used to indicate a first set, the first set comprises m reference signals, each reference signal corresponds to one or more radio links between the terminal device and a network device, the first set is used by the terminal device to estimate quality of radio links corresponding to the m reference signals, and m is an integer greater than or equal to 2; and
receiving second indication information sent by the terminal device, wherein the second indication information is used to indicate n first reference signals, the n first reference signals are n reference signals, in the m reference signals, corresponding to radio links whose quality is lower than a first threshold, and n is a positive integer less than m.

11. The method according to claim 10, wherein each of the m reference signals corresponds to one uplink resource, and
the receiving second indication information sent by the terminal device comprises:
receiving the second indication information by using an uplink resource corresponding to each of the n first reference signals.

12. The method according to claim 10 or 11, wherein each of the m reference signals corresponds to one index value, and
the second indication information comprises an index value of each of the n first reference signals.

13. The method according to any one of claims 10 to 12, wherein each of the m reference signals corresponds to one sequence, and
the second indication information comprises a sequence corresponding to each of the n first reference signals.

14. The method according to any one of claims 10 to 13, wherein the method further comprises:
receiving a random access signal sent by the terminal device, wherein the random access signal is used to indicate the network device to recover the radio link between the terminal device and the network device.

15. The method according to claim 14, wherein
the receiving a random access signal sent by the terminal device comprises:
receiving the random access signal based on quasi co-location QCL information of a second reference signal.

16. The method according to claim 14 or 15, wherein the method further comprises:
sending downlink control information to the terminal device in a recovery search space set and/or a recovery control resource set based on the QCL information of the second reference signal, wherein
the downlink control information is used for scheduling downlink data comprising signaling used to activate or configure a transmission configuration indicator TCI state.

17. The method according to any one of claims 10 to 16, wherein that the n first reference signals are n reference signals, in the m reference signals, corresponding to radio links whose quality is lower than a first threshold comprises:
the n first reference signals are n reference signals, in the m reference signals, whose first parameters each have a value less than the first threshold, wherein the value of the first parameter of each reference signal is used to represent quality of a radio link corresponding to the reference signal.

18. A radio link failure detection communication apparatus, comprising:
a transceiver unit, configured to receive first indication information, wherein the first indication information is used to indicate a first set, the first set comprises m reference signals, each reference signal corresponds to one or more radio links between a terminal device and a network device; and
a processing unit, configured to estimate, based on the first set indicated by using the first indication information received by the transceiver unit, quality of radio links corresponding to the m reference signals comprised in the first set, wherein m is an integer greater than or equal to 2, wherein
the transceiver unit is further configured to send second indication information, wherein the second indication information is used to indicate n first reference signals, the n first reference signals are n reference signals, in the m reference signals, corresponding to radio links whose quality is lower than a first threshold, and n is a positive integer less than m.

19. The communication apparatus according to claim 18, wherein the transceiver unit is further configured to:
when each of the m reference signals corresponds to one uplink resource, send the second indication information by using an uplink resource corresponding to each of the n first reference signals.

20. The communication apparatus according to claim 18 or 19, wherein each of the m reference signals corresponds to one index value, and
the second indication information comprises an index value of each of the n first reference signals.

21. The communication apparatus according to any one of claims 18 to 20, wherein each of the m reference signals corresponds to one sequence, and
the second indication information comprises a sequence corresponding to each of the n first reference signals.

22. The communication apparatus according to any one of claims 18 to 21, wherein
the transceiver unit is further configured to send a random access signal, wherein the random access signal is used to indicate the network device to recover the radio link between the terminal device and the network device.

23. The communication apparatus according to claim 22, wherein
the transceiver unit is further configured to send the random access signal based on quasi co-location QCL information of a second reference signal.

24. The communication apparatus according to claim 22 or 23, wherein
the processing unit is further configured to detect downlink control information in a recovery search space set and/or a recovery control resource set based on the QCL information of the second reference signal, wherein
the downlink control information is used for scheduling downlink data comprising signaling used to activate or configure a transmission configuration indicator TCI state.

25. The communication apparatus according to any one of claims 18 to 24, wherein
the processing unit is further configured to: measure a value of a first parameter of each reference signal in the first set, and determine the n first reference signals based on the value of the first parameter of each reference signal in the first set.

26. The communication apparatus according to any one of claims 18 to 25, wherein
that the n first reference signals are n reference signals, in the m reference signals, corresponding to radio links whose quality is lower than a first threshold comprises:
the n first reference signals are n reference signals, in the m reference signals, whose first parameters each have a value less than the first threshold, wherein the value of the first parameter of each reference signal represents quality of a radio link corresponding to the reference signal.

27. A radio link failure detection communication apparatus, comprising:
a transceiver unit, configured to send first indication information, wherein the first indication information is used to indicate a first set, the first set comprises m reference signals, each reference signal corresponds to one or more radio links between a terminal device and a network device, the first set is used by the terminal device to estimate quality of radio links corresponding to the m reference signals, and m is an integer greater than or equal to 2, wherein
the transceiver unit is further configured to receive second indication information, wherein the second indication information is used to indicate n first reference signals, the n first reference signals are n reference signals, in the m reference signals, corresponding to radio links whose quality is lower than a first threshold, and n is a positive integer less than m; and
a processing unit, configured to determine that the quality of the radio links corresponding to the n first reference signals indicated by using the second indication information received by the transceiver unit is lower than the first threshold.

28. The communication apparatus according to claim 27, wherein the transceiver unit is further configured to:
when each of the m reference signals corresponds to one uplink resource, receive the second indication information by using an uplink resource corresponding to each of the n first reference signals.

29. The communication apparatus according to claim 27 or 28, wherein each of the m reference signals corresponds to one index value, and
the second indication information comprises an index value of each of the n first reference signals.

30. The communication apparatus according to any one of claims 27 to 29, wherein each of the m reference signals corresponds to one sequence, and
the second indication information comprises a sequence corresponding to each of the n first reference signals.

31. The communication apparatus according to any one of claims 27 to 30, wherein
the transceiver unit is further configured to receive a random access signal, wherein the random access signal is used to indicate the network device to recover the radio link between the terminal device and the network device.

32. The communication apparatus according to claim 31, wherein
that the transceiver unit is further configured to receive a random access signal comprises:
the transceiver unit is further configured to receive the random access signal based on quasi co-location QCL information of a second reference signal.

33. The communication apparatus according to claim 31 or 32, wherein
the transceiver unit is further configured to send downlink control information in a recovery search space set and/or a recovery control resource set based on the QCL information of the second reference signal, wherein
the downlink control information is used for scheduling downlink data comprising signaling used to activate or configure a transmission configuration indicator TCI state.

34. The communication apparatus according to any one of claims 27 to 33, wherein that the n first reference signals are n reference signals, in the m reference signals, corresponding to radio links whose quality is lower than a first threshold comprises:
the n first reference signals are n reference signals, in the m reference signals, whose first parameters each have a value less than the first threshold, wherein the value of the first parameter of each reference signal is used to represent quality of a radio link corresponding to the reference signal.

35. A computer-readable storage medium, comprising a computer program, wherein when the computer program is run on a computer, the computer is enabled to perform the method according to any one of claims 1 to 17.

36. A chip, comprising at least one processor and a communication interface, wherein
the communication interface is configured to: receive a signal from another communication apparatus other than the communication apparatus, and transmit the signal to the processor or send a signal from the processor to the another communication apparatus other than the communication apparatus; and the processor is configured to implement the method according to any one of claims 1 to 17 by using a logic circuit or by executing code instructions.

37. A computer program product, wherein the computer program product comprises a computer program, and when the computer program is run, a computer is enabled to perform the method according to any one of claims 1 to 17.
